# EUROPEAN PATENT APPLICATION

(11) **EP 4 468 555 A1**
(43) Date of publication of application: **27.11.2024**
(21) Application number: 23769733.9
(22) Date of filing: 14.03.2023
(51) Int. Cl.: H02J 7/00, H01M 10/615, H01M 10/623, H01M 10/633, H01M 10/635, H01M 10/637, H01M 10/667, H02J 7/02, H02J 50/10, H01M 10/44, H05B 6/06, H01M 10/63, H01M 10/647, H01M 10/657

(54) **CHARGING METHOD AND RELATED APPARATUS**

(30) Priority: 15.03.2022 CN 202210250593; 29.04.2022 CN 202210467593
(71) Applicant: Huawei Technologies Co., Ltd., Shenzhen, Guangdong 518129 (CN)
(72) Inventor: HE, Zerui, Shenzhen, Guangdong 518129 (CN); CUI, Rui, Shenzhen, Guangdong 518129 (CN)
(74) Representative: Pfenning, Meinig & Partner mbB
(86) International application number: PCT/CN2023/081206
(87) International publication number: WO 2023/174231

(57) **Abstract**

This application discloses a charging method and a related apparatus. When an electronic device determines that a charging port is connected to a charging power supply, the electronic device may detect a temperature of a battery of the electronic device. When the temperature of the battery is less than a first temperature value, the electronic device may control the charging power supply to stop charging the battery, and control the charging power supply to supply power to a wireless coil, so that the wireless coil generates heat and transfers thermal energy to the battery. In this way, the electronic device may increase the temperature of the battery through the heat generated by the wireless coil, to avoid a case in which the electronic device cannot be charged at a low temperature. In addition, because the wireless coil is generally disposed on a surface of the battery, a contact area between the wireless coil and the battery is large, the battery is heated evenly, heat transfer efficiency is high, and energy consumption is low.

## Description

This application claims priorities to Chinese Patent Application No. 202210250593.1, filed with the China National Intellectual Property Administration on March 15, 2022 and entitled "CHARGING METHOD", and to Chinese Patent Application No. 202210467593.7, filed with the China National Intellectual Property Administration on April 29, 2022 and entitled "CHARGING METHOD AND RELATED APPARATUS", which are incorporated herein by reference in their entireties.

### TECHNICAL FIELD

This application relates to the field of terminal technologies, and in particular, to a charging method and a related apparatus.

### BACKGROUND

Chemical activity of a battery varies with a temperature. At a low temperature, the chemical activity of the battery is poor, polarization is enhanced, and crystallization is easily generated inside the battery. If the battery is charged at the low temperature, not only a charging speed is slow, but also performance and life of the battery are affected, and even the battery explodes during charging. Therefore, how to charge at the low temperature becomes an urgent problem to be resolved.

### SUMMARY

This application provides a charging method and a related apparatus, to supply power to a wireless coil when a temperature of a battery is lower than a first temperature value, so that the wireless coil generates heat to increase the temperature of the battery, and an electronic device can control a charging power supply to charge the battery at a low temperature.

According to a first aspect, this application provides a charging method, including: determining that a charging port is connected to a charging power supply;
when a temperature of a battery is lower than a first temperature value, controlling the charging power supply to supply power to a wireless coil, so that the wireless coil generates heat, to increase the temperature of the battery; and
when the temperature of the battery is higher than a second temperature value, controlling the charging power supply to charge the battery, where the second temperature value is greater than or equal to the first temperature value.

In this way, an electronic device may increase the temperature of the battery through heat generated by the wireless coil, to avoid a case in which the electronic device cannot be charged at a low temperature. In addition, because the wireless coil is generally disposed on a surface of the battery, a contact area between the wireless coil and the battery is large, the battery is heated evenly, heat transfer efficiency is high, and energy consumption is low, so that the battery can reach a charging temperature in shorter time. This reduces charging time.

In a possible implementation, when the temperature of the battery is lower than the first temperature value, the method further includes: controlling the charging power supply to supply power to a main system. In this way, a decrease in a battery level can be avoided.

In a possible implementation, when the temperature of the battery is lower than the first temperature value, the method further includes: controlling the charging power supply not to charge the battery.

In this way, battery losses caused by charging the battery at the low temperature can be avoided.

In a possible implementation, when the temperature of the battery is lower than the first temperature value, the method further includes: controlling the battery not to charge the main system.

In this way, not only battery level consumption can be avoided, but also a case in which a voltage may be unstable and an electronic device may break down when the battery outputs a large current at the low temperature can be avoided.

In a possible implementation, the controlling the charging power supply to supply power to a wireless coil specifically includes: controlling the charging power supply to supply power to a charging chip, and controlling the charging chip to supply power to the wireless coil.

In a possible implementation, the controlling the charging power supply to supply power to a charging chip, and controlling the charging chip to supply power to the wireless coil specifically includes: controlling the charging power supply to input a direct current to the charging chip; controlling the charging chip to convert the direct current into an alternating current; and controlling the charging chip to transfer the alternating current to the wireless coil.

In a possible implementation, a power supply frequency at which the charging power supply supplies power to the wireless coil is a first power supply frequency, and the first power supply frequency is a power supply frequency used to determine that the charging chip supplies power to the wireless coil.

Optionally, the first power supply frequency is a maximum power supply frequency at which the charging chip supplies power to the wireless coil.

In a possible implementation, the method further includes: a supply power at which the charging power supply supplies power to the wireless coil is a first wireless supply power, and the first wireless supply power is a supply power used to determine that the charging power supply supplies power to the wireless coil.

Optionally, the first wireless supply power is a maximum supply power at which the charging chip supplies power to the wireless coil.

In a possible implementation, the method further includes: controlling the wireless coil to send a first signal in a first periodicity, where the first periodicity is a periodicity used to determine that the wireless coil sends the first signal.

Optionally, the first periodicity is a minimum periodicity in which the wireless coil sends the first signal, for example, 0 ms.

In a possible implementation, in a period in which the charging power supply is controlled to supply power to the wireless coil, the method further includes: if the charging port is disconnected from the charging power supply, stopping supplying power to the wireless coil.

In a possible implementation, in the period in which the charging power supply is controlled to supply power to the wireless coil, the method further includes: if the battery supplies power to the main system, controlling the charging power supply to stop supplying power to the wireless coil.

In a possible implementation, in the period of the charging power supply is controlled to supply power to the wireless coil, the method further includes: if a display is screen-on, controlling the charging power supply to suspend supplying power to the wireless coil, and displaying heating prompt information on the display, where the heating prompt information prompts a user that the battery is being heated.

In a possible implementation, in a period in which the charging power supply is controlled to suspend supplying power to the wireless coil, and the heating prompt information is displayed on the display, the method further includes: if the display is screen-off, controlling the charging power supply to continue to supply power to the wireless coil.

In a possible implementation, the charging power supply supplies power to the wireless coil at a first supply power, and supplies power to the main system at a second supply power, and in the period in which the charging power supply is controlled to supply power to the wireless coil, the method further includes: if power consumption of the main system is greater than a first power consumption value, controlling the charging power supply to supply power to the wireless coil at a third supply power and supply power to the main system at a fourth supply power, where the first supply power is greater than the third supply power, and the second supply power is less than the fourth supply power.

In this way, a power for supplying power to the wireless coil may be adjusted based on the power consumption of the main system, to prevent the electronic device from being shut down due to insufficient power supply of the main system.

In a possible implementation, in a period in which the charging power supply is controlled to supply power to the wireless coil at the third supply power and supply power to the main system at the fourth supply power, the method further includes: if the power consumption of the main system is less than or equal to the first power consumption value, controlling the charging power supply to supply power to the wireless coil at the first supply power and supply power to the main system at the second supply power.

In a possible implementation, the charging power supply supplies power to the wireless coil at the first supply power, and supplies power to the main system at the second supply power, and in the period in which the charging power supply is controlled to supply power to the wireless coil, the method further includes: if the power consumption of the main system is greater than a second power consumption value, controlling the charging power supply to suspend supplying power to the wireless coil. In this way, when the power consumption of the main system is excessively high, electric energy required by the main system is preferentially ensured.

In a possible implementation, in a period in which the charging power supply is controlled to suspend supplying power to the wireless coil, the method further includes: if the power consumption of the main system is less than or equal to the second power consumption value, controlling the charging power supply to continue to supply power to the wireless coil.

In a possible implementation, in the period in which the charging power supply is controlled to supply power to the wireless coil, the method further includes: if a housing temperature is higher than a first housing temperature value, and the display is screen-on, controlling the charging power supply to suspend supplying power to the wireless coil, and displaying high temperature prompt information on the display, where the high temperature prompt information prompts the user that the housing temperature is high. In this way, a case in which user experience is poor due to an excessively high housing temperature can be avoided.

In a possible implementation, in a period in which the charging power supply is controlled to charge the battery, the method further includes: controlling the charging power supply to stop supplying power to the wireless coil.

In a possible implementation, the controlling the charging power supply to charge the battery specifically includes: controlling the charging power supply to charge the battery in a direct current fast charging manner.

In this way, the battery may be charged in a fast charging manner. This reduces charging time.

In a possible implementation, the charging power supply is connected to the charging port via a charging device, and charging protocols supported by the charging device include a dedicated charging protocol DCP, a fast charging protocol FCP, a smart charging protocol SCP, and a power delivery PD charging protocol.

According to a second aspect, this application provides an electronic device, where the electronic device includes a processor, a wireless coil, and a battery, and the wireless coil is located near the battery; the processor is configured to: determine that a charging port is connected to a charging power supply, and when a temperature of the battery is lower than a first temperature value, control the charging power supply to supply power to the wireless coil, so that the wireless coil generates heat, to increase the temperature of the battery; and the processor is further configured to: when the temperature of the battery is higher than a second temperature value, control the charging power supply to charge the battery, where the second temperature value is greater than or equal to the first temperature value.

In a possible implementation, when the temperature of the battery is lower than the first temperature value, the processor is further configured to control the charging power supply to supply power to a main system.

In a possible implementation, when the temperature of the battery is lower than the first temperature value, the processor is further configured to control the charging power supply not to charge the battery.

In a possible implementation, when the temperature of the battery is lower than the first temperature value, the processor is further configured to control the battery not to supply power to the main system.

In a possible implementation, the electronic device further includes a charging chip; and the processor is specifically configured to: control the charging power supply to supply power to the charging chip, and control the charging chip to supply power to the wireless coil.

In a possible implementation, the charging chip is specifically configured to: receive a direct current input by the charging power supply, convert the direct current into an alternating current, and transfer the alternating current to the wireless coil.

In a possible implementation, the processor is specifically configured to control the charging power supply to supply power to the wireless coil at a first power supply frequency, where the first power supply frequency is a power supply frequency used to determine that the electronic device supplies power to the wireless coil.

In a possible implementation, the processor is specifically configured to control the charging power supply to supply power to the wireless coil at a first wireless supply power, where the first wireless power supply frequency is a power supply power used to determine that the electronic device supplies power to the wireless coil.

In a possible implementation, the processor is further configured to control the wireless coil to send a first signal in a first periodicity, where the first periodicity is a periodicity used to determine that the electronic device sends the first signal.

In a possible implementation, the processor is further configured to: in a period in which the charging power supply is controlled to supply power to the wireless coil, if the charging port is disconnected from the charging power supply, stop supplying power to the wireless coil.

In a possible implementation, the processor is further configured to: in the period in which the charging power supply is controlled to supply power to the wireless coil, if the battery supplies power to the main system, control the charging power supply to stop supplying power to the wireless coil.

In a possible implementation, the electronic device further includes a display; and
the processor is further configured to: in the period in which the charging power supply is controlled to supply power to the wireless coil, if the display is screen-on, control the charging power supply to suspend supplying power to the wireless coil, and display heating prompt information on the display, where the heating prompt information prompts a user that the battery is being heated.

In a possible implementation, the processor is further configured to: in a period in which the charging power supply is controlled to suspend supplying power to the wireless coil, and the heating prompt information is displayed on the display, if the display is screen-off, control the charging power supply to continue to supply power to the wireless coil.

In a possible implementation, the processor is specifically configured to control the charging power supply to supply power to the wireless coil at a first supply power and supply power to the main system at a second supply power; and
the processor is further configured to: in a period in which the charging power supply is controlled to supply power to the wireless coil at the first supply power and supply power to the main system at the second supply power, if power consumption of the main system is greater than a first power consumption value, control the charging power supply to supply power to the wireless coil at a third supply power and supply power to the main system at a fourth supply power, where the first supply power is greater than the third supply power, and the second supply power is less than the fourth supply power.

In a possible implementation, the processor is further configured to: in a period in which the charging power supply is controlled to supply power to the wireless coil at the third supply power and supply power to the main system at the fourth supply power, if the power consumption of the main system is less than or equal to the first power consumption value, control the charging power supply to supply power to the wireless coil at the first supply power and supply power to the main system at the second supply power.

In a possible implementation, the processor is specifically configured to control the charging power supply to supply power to the wireless coil at the first supply power and supply power to the main system at the second supply power; and
the processor is further configured to: in the period in which the charging power supply is controlled to supply power to the wireless coil at the first supply power and supply power to the main system at the second supply power, if the power consumption of the main system is greater than a second power consumption value, control the charging power supply to suspend supplying power to the wireless coil.

In a possible implementation, the processor is further configured to: in a period in which the charging power supply is controlled to suspend supplying power to the wireless coil, if the power consumption of the main system is less than or equal to the second power consumption value, control the charging power supply to continue to supply power to the wireless coil.

In a possible implementation, the electronic device further includes a display; and
the processor is further configured to: in the period in which the charging power supply is controlled to supply power to the wireless coil, if a housing temperature is higher than a first housing temperature value, and the display is screen-on, control the charging power supply to suspend supplying power to the wireless coil, and display high temperature prompt information on the display, where the high temperature prompt information prompts the user that the housing temperature is high.

In a possible implementation, the processor is further configured to: in a period in which the charging power supply is controlled to charge the battery, control the charging power supply to stop supplying power to the wireless coil.

In a possible implementation, the processor is specifically configured to control the charging power supply to charge the battery in a direct current fast charging manner.

In a possible implementation, the charging power supply is connected to the charging port via a charging device, and charging protocols supported by the charging device include a dedicated charging protocol DCP, a fast charging protocol FCP, a smart charging protocol SCP, and a power delivery PD charging protocol.

According to a third aspect, an embodiment of this application provides a processor. The processor is configured to invoke computer instructions, so that an electronic device performs the charging method according to any possible implementation of the first aspect.

According to a fourth aspect, an embodiment of this application provides a computer-readable storage medium, including instructions. When the instructions run on an electronic device, the electronic device is enabled to perform the charging method according to any possible implementation of the first aspect.

According to a fifth aspect, an embodiment of this application provides a computer program product, including computer instructions. When the computer instructions are executed by one or more processors, the one or more processors are enabled to perform the charging method according to any possible implementation of the first aspect.

### BRIEF DESCRIPTION OF DRAWINGS

FIG. 1A is a diagram of a wireless coil and a battery according to an embodiment of this application;
FIG. 1B is a diagram of a structure of an electronic device 100 according to an embodiment of this application;
FIG. 2 is a diagram of a charging management system according to an embodiment of this application;
FIG. 3 is a schematic flowchart of a charging method according to an embodiment of this application;
FIG. 4 is a schematic flowchart of another charging method according to an embodiment of this application;
FIG. 5A to FIG. 5C are diagrams of a group of interfaces according to an embodiment of this application;
FIG. 6A to FIG. 6C are diagrams of another group of interfaces according to an embodiment of this application; and
FIG. 7A and FIG. 7B are a schematic flowchart of another charging method according to an embodiment of this application.

### DESCRIPTION OF EMBODIMENTS

Technical solutions according to embodiments of this application are clearly and completely described in the following with reference to the accompanying drawings. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

The following terms "first" and "second" mentioned below are only intended for the purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

In some application scenarios, when an electronic device has an insufficient battery level and needs to be charged, if a temperature of the battery of the electronic device is too low, the electronic device usually cannot be charged or the charging speed is slow. This severely affects charging efficiency and causes poor charging experience of a user. To improve safety of battery charging, the Japan Electronics and Information Technology Industry Association (Japan Electronics and Information Technology Industries Association, JEITA) released a JEITA standard to regulate charging rules. For example, a battery with a battery capacity of 4400 mAh is used as an example, and standards for charging the battery at different temperatures are shown in the following Table 1:

**Table 1: JEITA temperature control standards**

| Temperature | Charging mode | Charging current (unit: mA) | Current limiting standard |
|---|---|---|---|
| Below 0°C | None | 0 | 0 |
| 0-5°C | Common (buck) charging | 440 | 0.1 C |
| 5-10°C | Buck charging | 1320 | 0.3 C |
| 10-45°C | Fast charging | 13200 | No regulation |

C in Table 1 is determined by the battery capacity. Herein, a value of C is 4400. When the temperature of the battery is below 0°C, the battery cannot be charged. When the temperature of the battery falls within 0-5°C, the current limit standard is 0.1 C, and a maximum charge current is 440 mA. When the temperature of the battery falls within 5-10°C, the current limit standard is 0.3 C, and a maximum charge current is 1320 mA. When the temperature of the battery falls within 10-45°C, there is no specified current limiting standard. Herein, 13200 mA shown in Table 1 is only an example, and a maximum charging current may also be another value. This is not limited in embodiments of this application. Alternatively, when the temperature of the battery falls within 10-45°C, a maximum current limiting standard is that the charging current does not exceed the maximum charging current, where the maximum charging current is a quotient of a charging power and a charging voltage. Because a common charging voltage is 5 V, when a charging power is 66 W, a maximum charging current is 13200 mA. When a charging power is 100 W, a maximum charge current is 200000 mA.

In a possible implementation, the electronic device may improve performance of a processor to increase a temperature of the processor, and the processor may transfer heat to the battery, to heat the battery. However, because the processor has a small size, the temperature of the battery is increased through heat generated by the processor, energy consumption is high, heating efficiency is not high, and the battery is not evenly heated.

Embodiments of this application provide a charging method. When an electronic device determines that a charging port is connected to a charging power supply, and that a temperature of a battery is less than a first temperature value, the electronic device may control the charging power supply to supply power to a wireless coil, so that the wireless coil generates heat, and thermal energy of the wireless coil may be transferred to the battery, to increase the temperature of the battery. When the temperature of the battery is higher than a second temperature value, the electronic device may control the charging power supply to charge the battery. In this way, the electronic device may increase the temperature of the battery through heat generated by the wireless coil, to avoid a case in which the electronic device cannot be charged at a low temperature. In addition, because the wireless coil is generally disposed on a surface of the battery, a contact area between the wireless coil and the battery is large, the battery is heated evenly, heat transfer efficiency is high, and energy consumption is low.

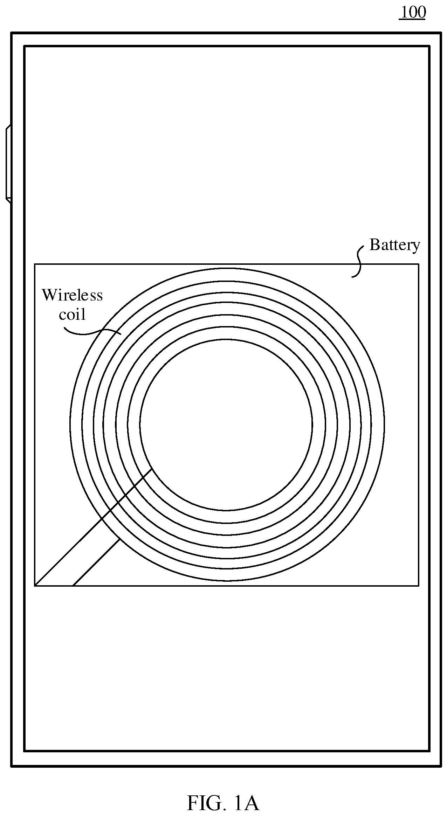

For example, in an electronic device 100 shown in FIG. 1A, the electronic device 100 may be configured to implement the charging method provided in embodiments of this application. A wireless coil of the electronic device 100 is disposed on a surface of a battery, and a contact area between the wireless coil and the battery is large. In a process in which the wireless coil performs wireless charging and discharging, because a current continuously flows in the coil, the wireless coil may continuously generate heat, and transfer thermal energy to the battery. In this way, the temperature of the battery of the electronic device 100 increases in the wireless charging and discharging process of the wireless coil, so that the electronic device 100 can also be charged at a low temperature.

The following describes a hardware structure of an electronic device 100 provided in an embodiment of this application.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device, and a specific type of the electronic device is not limited in embodiments of this application.

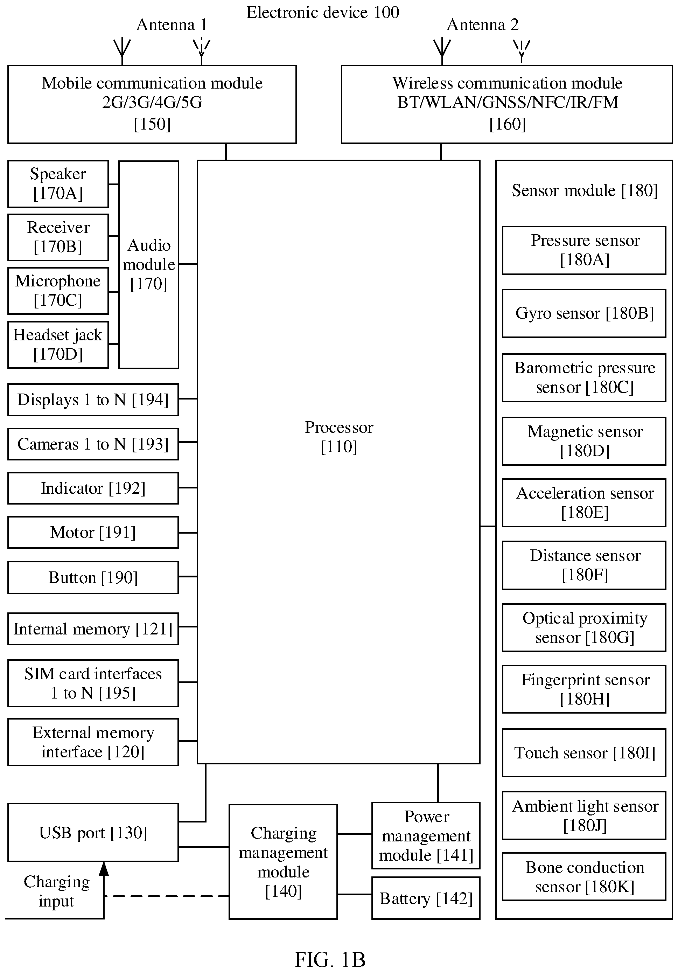

FIG. 1B is a diagram of a structure of the electronic device 100.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a touch sensor 180I, an ambient light sensor 180J, a bone conduction sensor 180K, and the like.

It may be understood that the structure shown in this embodiment of this application does not constitute a specific limitation on the electronic device 100. In some other embodiments of this application, the electronic device 100 may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The USB port 130 is a port that conforms to a USB standard specification, and may be specifically a mini USB port, a micro USB port, a USB Type-C port, or the like. The USB port 130 may be configured to connect to a charger to charge the electronic device 100, or may be configured to transmit data between the electronic device 100 and a peripheral device, or may be configured to connect to a headset, to play audio through the headset. The port may be configured to connect to another electronic device, for example, an AR device.

It may be understood that an interface connection relationship between the modules that is shown in this embodiment of the present disclosure is only an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charging power supply through a charger. The charger may be a wireless charger or a wired charger. In some embodiments of wireless charging, the charging management module 140 may receive a wireless charging input through a wireless coil of the electronic device 100. In some embodiments of wired charging, the charging management module 140 may receive a charging input from a wired charger through the USB port 130. The charging management module 140 supplies power to the electronic device through the power management module 141 while charging the battery 142. In some embodiments, the charging management module 140 may receive an input from the battery 142, and supply power to the processor 110 and the like by using the power management module 141. In some embodiments, the charging management module 140 may send a wireless charging output through a wireless coil of the electronic device 100, to supply power to another electronic device.

The power management module 141 is configured to connect to the charging management module 140 and the processor 110. The power management module 141 receives an input from the charging management module 140, and supplies power to the processor 110, the internal memory 121, the display 194, the camera 193, the wireless communication module 160, and the like. It should be noted that, in this embodiment of this application, devices such as the processor 110 and the internal memory 121 may be collectively referred to as a main system. In other words, the power management module 141 receives an input from the charging management module 140, and supplies power to the main system. The power management module 141 may be configured to monitor parameters such as a battery capacity, a battery cycle count, and a battery health status (electric leakage or impedance). In some embodiments, the power management module 141 may alternatively be disposed in the processor 110. In some other embodiments, the power management module 141 and the charging management module 140 may alternatively be disposed in a same device.

In some embodiments, the electronic device 100 further includes a wireless management module (not shown in the figure). The wireless management module may be configured to connect the charging management module 140 to the wireless coil. In some wireless charging embodiments, the wireless management module receives a charging input of a wireless charging device through the wireless coil, and charges the battery 142 and/or supplies power to the main system by using the charging management module 140. The wireless management module is configured to convert an alternating current input by the wireless coil into a direct current, and transmit the direct current to the charging management module 140. In some embodiments of wireless power supply (also referred to as wireless reverse charging), the wireless management module receives an input from the charging management module 140, and supplies power to the wireless coil. The wireless management module is configured to convert the direct current input by the charging management module 140 into an alternating current, and transmit the alternating current to the wireless coil.

Optionally, the wireless management module may be configured to set a power supply frequency for supplying power to the wireless coil. The power supply frequency may be understood as a quantity of times that an alternating current changes per second. A higher power supply frequency for the wireless coil indicates a larger quantity of times that the alternating current changes and a higher conversion rate at which the wireless coil converts electric energy into thermal energy. In this embodiment of this application, to increase the conversion rate at which the wireless coil converts the electric energy into the thermal energy, the wireless management module may set the power supply frequency as a maximum power supply frequency supported by the wireless coil.

Optionally, the wireless management module may be configured to set a supply power for supplying power to the wireless coil. For example, the wireless management module may set the supply power as any power value between 5 W and 10 W. A larger supply power for supplying power to the wireless coil indicates a larger current flowing through the wireless coil and a higher conversion rate at which the wireless coil converts the electric energy into the thermal energy. In this embodiment of this application, to increase the conversion rate at which the wireless coil converts the electric energy into the thermal energy, the wireless management module may set the supply power as a maximum supply power supported by the wireless coil, for example, 10 W.

Optionally, the wireless management module may be configured to set a sending periodicity for sending a first signal by the wireless coil. The first signal is a signal used by the electronic device 100 to search for a to-be-charged device. For example, the first signal sending periodicity may be 200 ms, and the wireless coil of the electronic device 100 may send the first signal every 200 ms. When the wireless coil sends the first signal, power consumption of the wireless coil increases, and the conversion rate at which the wireless coil converts the electric energy into the thermal energy increases. In this embodiment of this application, to increase the conversion rate at which the wireless coil converts the electric energy into the thermal energy, the wireless management module may set the sending periodicity as a minimum sending periodicity supported by the wireless coil. For example, the sending periodicity may be set as 0 ms, the wireless coil continuously sends first signals, and heat generated by the wireless coil increases.

In some embodiments, the wireless management module may be disposed in the processor 110. In some other embodiments, the charging management module 140 and the wireless management module may alternatively be disposed in a same device, for example, a charging chip (integrated circuit, IC) of the electronic device 100. In some other embodiments, the wireless management module may be disposed in a wireless chip of the electronic device 100, and the charging management module 140 may be disposed in a charging chip of the electronic device 100.

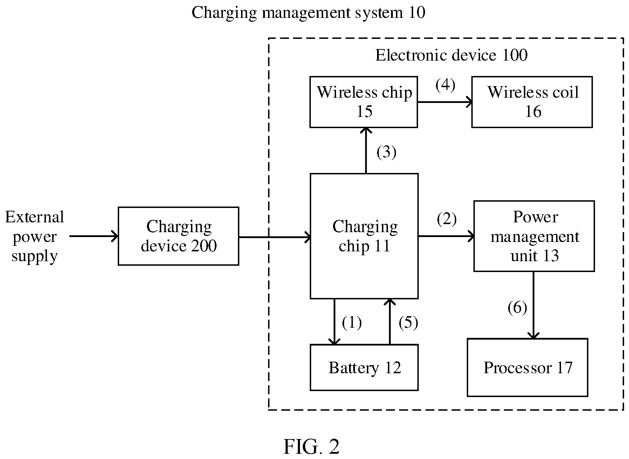

Optionally, the charging chip may be the charging chip 11 shown in FIG. 2, and the wireless chip may be the wireless chip 15 shown in FIG. 2.

The electronic device 100 further includes a temperature sensor A (not shown in FIG. 1B) configured to detect a temperature of the battery 142, and a temperature sensor B (not shown in FIG. 1B) configured to detect a housing temperature of the electronic device 100. In some embodiments, when the temperature sensor A detects that the temperature of the battery 142 is greater than a value and/or the temperature sensor B detects that the housing temperature of the electronic device 100 is greater than another value, the electronic device 100 reduces performance of the processor, to reduce power consumption and implement thermal protection. In some embodiments, when the temperature sensor A detects that the temperature of the battery 142 is less than another value (also referred to as a first temperature value), the wireless coil of the electronic device 100 receives an electric signal input from the charging management module 140, and radiates a wireless charging signal outwards. As a result, the wireless coil generates heat, and/or the electronic device 100 boosts an output voltage of the battery 142, and/or the electronic device 100 improves performance of the processor, and heat generated by the processor increases, to prevent the electronic device 100 from being abnormally shut down due to a low temperature. Optionally, the temperature sensor A and the temperature sensor B may be a same sensor.

A wireless communication function of the electronic device 100 may be implemented through the antenna 1, the antenna 2, the mobile communication module 150, the wireless communication module 160, the modem processor, the baseband processor, and the like. A device related to the wireless communication function is a common communication device, and details are not described herein again. It should be noted that these devices need to be powered by the power management module 141, to implement the wireless communication function.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like. The external memory interface 120 may be configured to connect to an external non-volatile memory, to expand a storage capability of the electronic device 100. The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (for example, audio data, and a phone book) created in a process of using the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The following describes a charging management system provided in an embodiment of this application.

For example, as shown in FIG. 2, a charging management system 10 may include an electronic device 100 and a charging device 200. The electronic device 100 may include but is not limited to a charging chip (integrated circuit, IC) 11, a battery 12, a power management unit (power management unit, PMU) 13, a wireless chip (IC) 15, a wireless coil 16, and a processor 17. The charging management system 10 may be configured to perform a charging method provided in embodiments of this application.

The charging chip 11 may be configured to receive a current input from an external power supply from the charging device 200, and supply power to different components of the electronic device. Herein, the charging chip 11 may charge the battery 12 through a circuit (1), to increase stored battery level of the battery 12. The charging chip 11 may further supply power to the processor 17 through a circuit (2), the power management unit 13, and a circuit (6), to maintain running of the electronic device 100. The charging chip 11 may further supply power to the wireless chip 15 through a circuit (3). The charging chip 11 may control whether to supply power to the circuit (1), the circuit (2), and the circuit (3), and a power of supplying power to each circuit. For example, an electric power of the charging device 200 is 66 W. When a temperature of the battery 12 is lower than a first temperature value (for example, 10°C), the charging chip 11 may allocate the electric power only to the circuit (2) and the circuit (3). If the electric power required by the processor 17 is 25 W, the charging chip 11 may allocate 25 W of the electric power to the circuit (2), and allocate 41 W of the electric power to the circuit (3).

In some embodiments, the electronic device 100 does not include the wireless chip 15, and a function of the wireless chip 15 is implemented by the charging chip 11. In other words, the wireless chip 15 and the charging chip 11 of the electronic device 100 are a same chip, and the chip may become the charging chip 11.

The battery 12 is a rechargeable battery, namely, a battery in which an active substance may be activated in a charging manner after the battery is discharged, to continue to be used. For example, the battery 12 may be a lithium-ion battery, a nickel-cadmium battery, a nickel-hydrogen battery, a lead-acid battery, or the like. The battery 12 may be configured to supply power to the processor 17 by using the charging chip 11 and the power management unit 13.

The power management unit 13 may be configured to: connect the charging chip 11 to the processor 17, and transmit electric energy provided by the charging chip 11 to the processor 17.

It should be noted that, not limited to the processor 17, when the electronic device 100 further includes other components such as a sensor, a camera, and a display, the power management unit 13 may be further configured to transmit electric energy to these components of the electronic device 100. In this embodiment of this application, the processor 17 (and these components) may be referred to as a main system, and power consumption of the processor 17 (and these components) may be referred to as power consumption of the main system. Specifically, for other components included in the main system, refer to the devices that are driven by electric energy and that are shown in FIG. 1B such as the sensor module 180, the audio module 170, and the mobile communication module 150.

The wireless chip 15 may be configured to: when the electronic device 100 controls the charging power supply to supply power to another electronic device, convert a direct current output by the charging chip 11 into an alternating current, and input the alternating current to the wireless coil 16 through the circuit (4), so that the wireless coil 16 converts electric energy into magnetic energy by using an electromagnetic induction effect. In a process in which the wireless coil 16 converts the electric energy into the magnetic energy, because a current passes through, the wireless coil 16 generates heat, and converts the electric energy into the thermal energy.

The wireless chip 15 may be further configured to adjust a frequency (also referred to as a power supply frequency) of an alternating current input to the wireless coil 16, to adjust a conversion rate of converting the electric energy into the thermal energy by the wireless coil 16. The power supply frequency may be understood as a quantity of times that the alternating current changes per second. The electronic device 100 stores a configuration file of the wireless coil, for example, a device tree source (device tree source, DTC) file. The configuration file includes a range of a power supply frequency of the wireless coil. The electronic device 100 may set the power supply frequency of the wireless coil as a maximum power supply frequency, to improve a conversion rate at which the wireless coil 16 converts the electric energy into the thermal energy.

The wireless chip 15 may be further configured to adjust a sending periodicity for sending a first signal by the wireless coil 16. The first signal may be a signal used to search for a nearby to-be-charged device, and the sending periodicity is a periodicity in which the wireless coil 16 sends the first signal. The electronic device 100 stores the configuration file of the wireless coil, for example, the device tree source file. The configuration file includes a range of the sending periodicity for sending the first signal by the wireless coil, for example, 0 ms to 200 ms. When the wireless coil sends the first signal, power consumption of the wireless coil increases, and the conversion rate at which the wireless coil converts the electric energy into the thermal energy increases. To increase the conversion rate of converting the electric energy into the thermal energy, the electronic device 100 may set the sending periodicity of the wireless coil as a minimum periodicity, for example, 0 ms, to improve a conversion rate at which the wireless coil 16 converts the electric energy into the thermal energy.

In some embodiments, when the electronic device 100 receives a charging input from an external power supply from a wireless charging device, the wireless coil 16 converts magnetic energy into electric energy through electromagnetic induction. The wireless chip 15 may convert an alternating current of the wireless coil 16 into a direct current through the circuit (4), and output the direct current to the charging chip 11.

In this solution, the wireless coil 16 is supplied power, so that thermal energy is generated in a working process of the wireless coil 16, and the thermal energy is transferred to the battery 12, so that a temperature of the battery 12 is increased.

The charging device 200 may be configured to: connect the external power supply to the charging chip 11, and transfer electric energy of the external power supply to the charging chip 11. The external power supply may be a 220 V wired power supply, a mobile power bank, or the like.

In some embodiments, the charging chip 11 may include the charging management module 140 shown in FIG. 1B, the battery 12 may be the battery 142 shown in FIG. 1B, the power management unit 13 may include the power management module 141 shown in FIG. 1B, and the wireless chip 15 may include the wireless management module shown in FIG. 1B.

The following describes a schematic flowchart of a charging method according to an embodiment of this application.

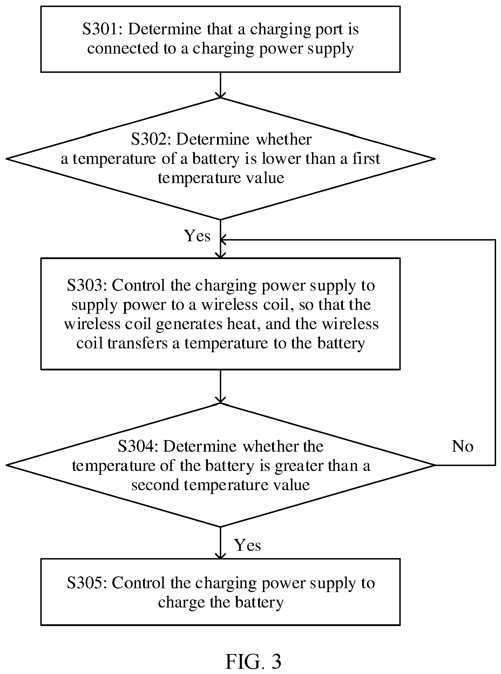

As shown in FIG. 3, the charging method includes the following steps.

S301: An electronic device 100 determines that a charging port is connected to a charging power supply.

The electronic device 100 may determine, through a charging IC, that the charging port is connected to the charging power supply. For example, after a charging plug of a charger is connected to the charging port of the electronic device 100, the charger transmits electric energy of the charging power supply to the charging IC, and the charging IC may determine, based on the electric energy, that the charger is inserted. In some embodiments, when the electronic device 100 detects an electric signal of the charging plug of the charger, the electronic device 100 may determine that the charging port is connected to the charging power supply.

For example, in response to a case in which the electronic device 100 determines that the charging port is connected to the charging power supply, the electronic device 100 may invoke a function bat_beating_start(). The charging port may be connected to the charging power supply to trigger an interrupt, and the electronic device 100 may asynchronously perform the function bat_beating_start() through the interrupt. The function bat_beating_start() may be used to create a main thread work of a program for heating a battery. After the main thread is created, the electronic device 100 may invoke a function bat_heating_monitor _work() to create a thread monitor. The thread monitor may be used to monitor a start heating event ET_HEATING_START.

S302: The electronic device 100 determines whether a temperature of the battery is lower than a first temperature value.

When the electronic device 100 detects that the temperature of the battery is less than the first temperature value, the electronic device 100 may perform step S303. The first temperature value may be a preset value (for example, 5°C), or may be a value specified in a charging rule (for example, a temperature 10°C indicated in the JEITA). The electronic device 100 may obtain the temperature of the battery via a temperature sensor, for example, the temperature sensor A in the embodiment shown in FIG. 1B.

In some embodiments, if the battery of the electronic device 100 includes a thermistor, for example, a positive temperature coefficient (positive temperature coefficient, PTC) thermistor, the electronic device 100 may determine the temperature of the battery based on a correspondence between a temperature of the thermistor and a resistance value.

In some embodiments, the electronic device 100 may use an ambient temperature as the temperature of the battery. The electronic device 100 may obtain the ambient temperature via the temperature sensor.

When the electronic device 100 detects that the temperature of the battery of the electronic device 100 is greater than or equal to the first temperature value, the electronic device 100 does not perform step S302, and controls the charging power supply and/or the battery to supply power to the battery of the electronic device 100.

Optionally, when the temperature of the battery is less than a lowest temperature value (for example, -10°C, -15°C, or -20°C), the electronic device 100 does not perform step S302. In other words, when the electronic device 100 detects that the temperature of the battery is less than the lowest temperature value, the electronic device 100 cannot perform an operation of controlling a wireless coil to generate heat, to heat the battery. In this way, a case in which the temperature of the battery cannot be increased to a second temperature value even if the battery is heated by using the electric energy transmitted by the charging power supply due to an excessively low temperature can be avoided. This reduces losses of the electric energy.

In a possible implementation, the electronic device 100 can perform a battery heating operation only when the electronic device 100 detects that the temperature of the battery is less than the first temperature value and a preset condition is met. The preset condition may include one or more of the following: the charger supports a specified charging protocol, the charging power supply keeps supplying power to the electronic device 100, a battery level is less than a first battery level value, a power at which the charging power supply supplies power to the battery is less than a first charging power value, the wireless coil supports supplying power to another electronic device, and the like.

The specified charging protocol may include but is not limited to a dedicated charging protocol (dedicated charging protocol, DCP), a fast charging protocol (fast charging protocol, FCP), a smart charging protocol (smart charging protocol, SCP), and a power delivery (power delivery, PD) charging protocol. It should be noted that the specified charging protocol is not limited to the mentioned plurality of charging protocols. A charging protocol may be referred to as a specified charging protocol provided that a rated charging power supported by the charging protocol is greater than the first charging power value (for example, 10 W or 20 W). This is not limited in embodiments of this application. When the electronic device 100 determines that another condition in the preset condition except that the charger supports the specified charging protocol is met, step S303 can be performed only when the electronic device 100 determines that the charger supports the specified charging protocol. In this way, a case in which the wireless coil cannot be controlled to generate heat when the electronic device 100 is supplied power due to an excessively low charging power does not occur in the electronic device 100.

That the charging power supply keeps supplying power to the electronic device 100 may also be referred to as that the charger is in position. In some embodiments, that the charger is in position may be understood as that the charger and the electronic device 100 are plugged together and connected to the charging power supply, and the charging power supply may supply power to the electronic device 100 by using the charger. When the electronic device 100 determines that another condition in the preset condition except that the charger is in position is met, step S303 can be performed only when the electronic device 100 determines that the charger is in position. In this way, the electronic device 100 no longer controls the wireless coil to generate heat when separated from the charger.

In this embodiment of this application, the battery level may be represented by a state of charge (state of charge, SOC), which is a ratio of a remaining battery level to a maximum battery level. Herein, the first battery level value may be a value greater than 0 and less than 1, for example, 90%, 99%, or 100%. When the electronic device 100 determines that another condition in the preset condition except that a battery level is less than the first battery level value is met, step S303 can be performed only when the electronic device 100 determines that the battery level is less than the first battery level value. In this way, a case in which the electronic device 100 still controls the wireless coil to be heated when the battery level of the electronic device 100 is 100% can be avoided.

For the condition that an electric power (power) at which the charging power supply supplies power to the battery is less than the first charging power value in the preset condition, when the electronic device 100 determines that another condition in the preset condition except that the power at which the charging power supply supplies power to the battery is less than the first charging power value is met, step S303 can be performed only when the electronic device 100 determines that the power at which the charging power supply supplies power to the battery is less than the first charging power value. It may be understood that, when the power at which the charging power supply supplies power to the battery is greater than the first charging power value, the battery does not need to be heated, and the electronic device 100 may also be charged at a fast charging rate. In this way, the power for charging the battery can be prevented from being allocated to the wireless coil.

The first charging power value may be a preset value or a value determined based on a rated charging power of the charger. In some embodiments, the first charging power value may be a product of the rated charging power of the charger and a specified coefficient, and the specified coefficient is a fraction greater than 0 and less than 1. For example, when the rated charging power of the charger is 66 W, if the specified coefficient is 0.2, the first charging power value is 13.2 W. If the preset condition includes only whether the electric power at which the charging power supply supplies power to the battery is less than the first charging power value, the electronic device 100 can perform step S303 only when determining that the electric power at which the charging power supply supplies power to the battery is less than 13.2 W.

For the condition that the wireless coil supports supplying power to the another electronic device in the preset condition, in other words, whether the electronic device 100 can supply power to the another electronic device through the wireless coil, when the electronic device 100 determines that another condition in the preset condition except that the wireless coil supports supplying power to the another electronic device is met, step S303 can be performed only when the electronic device 100 determines that the wireless coil supports supplying power to the another electronic device. A conversion rate of converting electric energy into thermal energy when the electronic device 100 controls the charging power supply to supply power to the another electronic device through the wireless coil is higher than a conversion rate of converting electric energy into thermal energy when the electronic device 100 receives a wireless charging signal through the wireless coil. Therefore, the electronic device 100 controls the charging power supply to supply power to the another electronic device through the wireless coil, so that the battery can be heated to a chargeable temperature more quickly. In addition, when the electronic device 100 controls the charging power supply to supply power to the another electronic device through the wireless coil, a wireless charging device does not need to provide the electric energy, which is more convenient.

The charging port is not short-circuited. In some embodiments, whether the charging port is short-circuited may be determined based on whether a temperature difference between the charging port and the battery is greater than a first temperature difference value (for example, 15°C). When the temperature difference between the charging port and the battery is greater than the first temperature difference value, it may be determined that the charging port is short-circuited. When the temperature difference between the charging port and the battery is less than or equal to the first temperature difference value, it may be determined that the charging port is not short-circuited. When the electronic device 100 determines that another condition in the preset condition except that the charging port is not short-circuited is met, step S303 can be performed only when the electronic device 100 determines that the charging port is not short-circuited.

Specifically, the electronic device 100 can perform step S303 only when determining that the charging port is connected to the charging power supply, that the temperature of the battery is less than the first temperature value, and that the preset condition is met.

For example, after the thread monitor is successfully created, the electronic device 100 may invoke a function bat_heating_check(), and the function may be used to determine whether to invoke a battery heating service bms_heating. For a specific determining condition in the function bat _heating_check(), refer to the embodiment shown in step S302. In some embodiments, when the electronic device 100 determines whether the temperature of the battery is lower than the first temperature value, the electronic device 100 may store a first temperature threshold in a memory of the electronic device 100. A value of the first temperature threshold is the same as or close to the first temperature value. In other words, the first temperature value is a reference value of the first temperature threshold. The electronic device 100 may determine, by determining whether the temperature of the battery is lower than the first temperature threshold, whether the temperature of the battery of the electronic device 100 is lower than the first temperature value.

S303: The electronic device 100 controls the charging power supply to supply power to the wireless coil, so that the wireless coil generates heat, and the wireless coil transfers a temperature to the battery.

In some embodiments, when the temperature of the battery of the electronic device 100 is low (for example, the temperature of the battery is lower than 0°C), charging the battery may cause hardware losses. The electronic device 100 may further control the charging power supply not to supply power to the battery.

Specifically, when the electronic device 100 includes the circuit (1), the circuit (2), and the circuit (3) shown in FIG. 2, the charging chip 11 of the electronic device 100 may receive electric energy input by the charging power supply, and allocate the electric energy to the processor 17 corresponding to the circuit (2) and the wireless chip 15 corresponding to the circuit (3). The charging chip 11 of the electronic device 100 does not allocate electric energy to the circuit (1).

Further, when the temperature of the battery is low (for example, the temperature of the battery is lower than 0°C or 5°C), if the battery supplies power to the processor or the like, a case in which the electronic device 100 is powered off due to insufficient battery voltage may occur. To prevent running of the electronic device 100 from being affected by the temperature of the battery, the electronic device 100 may stop the battery from supplying power to a main system of the electronic device 100. For example, the electronic device 100 may control not to transmit a current in the circuit (5) shown in FIG. 2.

In some embodiments, a charging power of the charger is a first power. If power consumption of the main system is a second power, an electric power allocated to the circuit (2) is the second power, and an electric power allocated to the circuit (3) is a difference between the first power and the second power. In this way, the electronic device 100 can ensure running of the electronic device 100.

In some other embodiments, the charging power of the charger is the first power, the electric power allocated to the circuit (3) is a third power, and the electric power allocated to the circuit (2) is a difference between the first power and the third power, where the third power is less than the first power. In this way, the electronic device 100 may preferentially ensure the electric energy required for heating the battery.

In a possible implementation, the charging power of the charger is the first power. When the temperature of the battery falls within a first temperature range, the electric power allocated to the circuit (3) is a fourth power; or when the temperature of the battery falls within a second temperature range, the electric power allocated to the circuit (3) is a fifth power. Each temperature value within the first temperature range is less than any temperature value within the second temperature range, and the fourth power is greater than the fifth power. In this way, the electronic device 100 can reduce power consumption required for heating the battery after the temperature of the battery rises.

When the electronic device 100 controls the charging power supply to supply power to the wireless coil, the electronic device 100 may further set a working mode of the wireless coil (the wireless coil 16 shown in FIG. 2) by using a wireless chip (for example, the wireless chip 15 shown in FIG. 2), and set the working mode of the wireless coil to a transmit (transmit, TX) mode. The working mode of the wireless coil includes the TX mode and a receive (receive, RX) mode. In the TX mode, the wireless coil may transmit electric energy to another electronic device according to an electromagnetic induction principle. In the RX mode, the wireless coil may receive, according to an electromagnetic induction principle, electric energy transmitted by another electronic device. In the TX mode, when the wireless coil converts a part of the electric energy into magnetic energy, the wireless coil converts the other part of the electric energy into thermal energy. In this case, a temperature of the wireless coil increases, and the temperature is transferred to the battery, to heat the battery.

The electronic device 100 may further configure an operating parameter of the wireless chip. The operating parameter may include but is not limited to a power supply frequency for supplying power to the wireless coil, and a periodicity in which the wireless coil sends a first signal (for example, searches for a broadcast signal of another electronic device). The power supply frequency for the wireless coil and the periodicity in which the wireless coil sends the first signal may affect a conversion rate at which the wireless coil converts electric energy into thermal energy. A higher power supply frequency indicates more change times of the alternating current per second, and a higher conversion rate at which the wireless coil converts electric energy into thermal energy. A shorter periodicity in which the wireless coil sends the first signal indicates an increase in a quantity of times that the wireless coil sends the first signal, and a higher conversion rate at which the wireless coil converts electric energy into thermal energy. When the first signal sent by the wireless coil is a ping signal for searching for a to-be-charged device, the periodicity may be referred to as a ping periodicity.

For example, when the function bat_heating_check() returns a first invocation value (for example, returns a value 0), the electronic device 100 may invoke the battery heating service bms_heating, and upload the start heating event ET_HEATING_START to the thread monitor. After the thread monitor receives the start heating event ET_HEATING_START, the thread monitor can supply power to the wireless coil, set the working mode of the wireless coil to the TX mode, and configure a service parameter of the battery heating service bms _heating. The service parameter may include but is not limited to the operating parameter of the wireless chip, and the like. For the working parameter of the wireless chip, refer to the foregoing embodiment, and details are not described herein again.

Optionally, before the electronic device 100 configures the operating parameter of the wireless chip, the electronic device 100 may obtain a device tree source file stored in the electronic device 100. The DTS file stores a range of the power supply frequency at which the wireless chip supplies power to the wireless coil, and a range of the periodicity in which the wireless coil sends the first signal. Herein, the electronic device 100 may set the power supply frequency as a specified power supply frequency, where the specified power supply frequency is a maximum power supply frequency of the wireless coil in a configuration file (for example, the DTS file) of the wireless coil. The electronic device 100 may further set the periodicity in which the wireless coil sends the first signal as a sending periodicity, where the sending periodicity is a minimum periodicity in which the wireless coil sends the first signal in the configuration file of the wireless coil. The electronic device 100 may obtain, from the DTS file, the maximum power supply frequency at which the wireless chip supplies power and the minimum periodicity in which the wireless coil sends the first signal.

When the function bat_heating_check() returns the first invocation value (for example, returns a value 1), a parameter reset function bat_heating_set_default _data () may be invoked. The function may be used to initialize the service parameter of the battery heating service bms_heating.

In a possible implementation, in a process in which the electronic device 100 heats the battery, if the temperature of the electronic device 100 falls within a first-phase temperature range, the electronic device 100 may control the charging power supply to charge the battery by using a first-phase current while the electronic device 100 controls the charging power supply to supply power to the wireless coil and the main system. If the temperature of the electronic device 100 falls within a second-phase temperature range, the electronic device 100 may control the charging power supply to charge the battery by using a second-phase current while the electronic device 100 controls the charging power supply to supply power to the wireless coil and the main system. If the temperature of the electronic device 100 falls within a third-phase temperature range, the electronic device 100 may control the charging power supply to charge the battery by using a third-phase current while the electronic device 100 controls the charging power supply to supply power to the wireless coil and the main system. For example, the first-phase temperature range may be 0-5°C, and the first-phase current may be 440 mA. The second-phase temperature range may be 5-10°C, and the second-phase current may be 1320 mA. The third-phase temperature range may be 10°C to the second temperature value, and the third-phase current may be 13200 mA. In this way, the battery can be charged earlier.

In some embodiments, the electronic device 100 may detect the temperature of the battery in real time, to prevent the battery from continuing to be charged when the temperature of the battery is lower than a lowest temperature value (for example, 0°C).

In some embodiments, the electronic device 100 can control the charging power supply to charge the battery in a battery heating process only when a battery current is lower than a first charging battery level value (for example, 20%, 50%, or 70%). The first charging battery level value is lower than the first battery level value. The electronic device 100 may detect the battery level in real time, to prevent the battery form being still heated when the battery is fully charged.

In some other embodiments, the electronic device 100 can control the charging power supply to charge the battery in the battery heating process only when the battery current is higher than the first charging battery level value (for example, 20%, 50%, or 70%) and is lower than the first battery level value. The first charging battery level value is lower than the first battery level value. In this way, when the battery level of the electronic device 100 is low, a battery level value of the electronic device 100 can be increased while the coil is heated.

S304: Determine whether the temperature of the battery is greater than the second temperature value.

When the temperature of the battery is greater than (higher than) the second temperature value, the electronic device 100 performs step S305. When the temperature of the battery is less than (lower than) or equal to the second temperature value, the electronic device 100 performs step S304.

Alternatively, when the temperature of the battery is greater than (higher than) or equal to the second temperature value, the electronic device 100 performs step S305. When the temperature of the battery is less than (lower than) the second temperature value, the electronic device 100 performs step S304. Optionally, to reduce power consumption of the electronic device 100, the electronic device 100 may perform step S304 after preset waiting time when the electronic device 100 determines that the temperature of the battery is less than or equal to the second temperature value. The preset waiting time may be any time value greater than 0, for example, 500 ms.

In some embodiments, the electronic device 100 may monitor the temperature of the battery in real time.

In a possible implementation, the second temperature value is the same as the first temperature value. In some embodiments, because the second temperature value is the same as the first temperature value, after the temperature of the battery of the electronic device 100 reaches the second temperature value, the temperature of the battery gradually decreases due to impact of the ambient temperature, and the temperature of the battery is lower than the first temperature value again. In this way, the temperature of the battery of the electronic device 100 is usually kept close to the first temperature value, and an operation of heating the battery is performed for a plurality of times. This reduces charging efficiency.

In some examples, both the first temperature value and the second temperature value are 5°C. If the temperature of the battery is lower than 0°C, the electronic device 100 cannot control the charging power supply to charge the battery, and the electronic device 100 controls the charging power supply to supply power to the wireless coil. If the temperature of the battery is higher than 0°C and lower than 5°C, the electronic device 100 may control the charging power supply to supply power to the wireless coil. Alternatively, the electronic device 100 may control the charging power supply to supply power to the wireless coil, and start to control the charging power supply to charge the battery. If the temperature of the battery is higher than the second temperature value, the electronic device 100 may start to control the charging power supply to charge the battery. The electronic device 100 may not control the charging power supply to supply power to the wireless coil.

In a possible implementation, the second temperature value is greater than the first temperature value. In this way, in a case in which the temperature of the battery is lower than the first temperature value due to a low ambient temperature, the electronic device 100 may heat the battery to the second temperature value (for example, 30°C). Even if the temperature of the battery decreases by a part due to impact of the ambient temperature, the electronic device 100 may continue to control the charging power supply to charge the battery.

In some examples, if the first temperature value is 5°C, the second temperature value is 10°C. If the temperature of the battery is lower than 0°C, the electronic device 100 cannot control the charging power supply to charge the battery, and the electronic device 100 controls the charging power supply to supply power to the wireless coil. If the temperature of the battery is higher than 0°C and lower than 10°C, the electronic device 100 may control the charging power supply to supply power to the wireless coil. Alternatively, the electronic device 100 may control the charging power supply to supply power to the wireless coil, and start to control the charging power supply to charge the battery. If the temperature of the battery is higher than the second temperature value, the electronic device 100 may start to control the charging power supply to charge the battery. The electronic device 100 may not control the charging power supply to supply power to the wireless coil.

In some embodiments, when the electronic device 100 determines whether the temperature of the battery is higher than the second temperature value, the electronic device 100 may store a second temperature threshold in the memory of the electronic device 100. A value of the second temperature threshold is the same as or close to the second temperature value. In other words, the second temperature value is a reference value of the second temperature threshold. The electronic device 100 may determine, by determining whether the temperature of the battery is higher than the second temperature threshold, whether the temperature of the battery of the electronic device 100 is higher than the second temperature value.

In some embodiments, the electronic device 100 may store a hysteresis (hysteresis) parameter and a basic temperature parameter. The basic temperature parameter may be a preset value (for example, 5°C), or may be a value specified in a charging rule (for example, a temperature 10°C indicated in the JEITA). The hysteresis parameter is used to prevent the temperature of the battery of the electronic device 100 from being close to a temperature indicated by the basic temperature parameter. An initial value of the hysteresis parameter is a first value, and the first value is less than or equal to 0. The electronic device 100 can perform the battery heating operation only when the electronic device 100 determines that the temperature of the battery is lower than a sum of the basic temperature parameter and the hysteresis parameter. In other words, it may be understood that the first temperature threshold is the sum of the basic temperature parameter and the hysteresis parameter, and a value of the hysteresis parameter is the first value. Herein, being lower than may be understood as being less than, or being lower than may be understood as being less than or equal to.

After the electronic device 100 determines that the preset condition is met, the electronic device 100 may set the value of the hysteresis parameter as a second value, where the second value is greater than or equal to 0. When the electronic device 100 may determine that the temperature of the battery is higher than the sum of the hysteresis parameter and the basic temperature parameter, the electronic device 100 may stop the battery heating operation, and start a battery charging operation. In addition, the electronic device 100 may further set the value of the hysteresis parameter as the first value. In other words, it may be understood that the second temperature threshold is the sum of the basic temperature parameter and the hysteresis parameter, and the value of the hysteresis parameter is the second value. Herein, being higher than may be understood as being greater than, or being higher than may be understood as being greater than or equal to. It should be noted that, for ease of describing the hysteresis parameter and the basic temperature parameter herein, only a condition of whether the battery temperature in the preset condition is lower than the first temperature threshold is described. It may be understood that the preset condition may further include one or more other conditions in step S301, and the description herein should not constitute a limitation on the preset condition.

For example, the value of the temperature of the battery is 3, the value of the basic temperature parameter is 10, the first value is 0, and the second value is 10. First, the value of the hysteresis parameter is the first value, and the temperature of the battery is less than the sum of the basic temperature parameter and the hysteresis parameter. The electronic device 100 starts to heat the battery, and sets the value of the hysteresis parameter as the second value. When the temperature of the battery rises and the value of the temperature of the battery is 5, the temperature of the battery is still less than the sum of the basic temperature parameter and the hysteresis parameter, and the electronic device 100 continues to perform the battery heating operation. When the value of the battery temperature reaches 20, and the temperature of the battery is equal to the sum of the basic temperature parameter and the hysteresis parameter, the electronic device 100 may stop the battery heating operation, start to perform the battery charging operation, and set the value of the hysteresis parameter as the first value again, that is, set as 0. In this way, when the temperature of the battery of the electronic device 100 falls within a range of 10-20°C, the electronic device 100 does not perform the battery heating operation until the temperature of the battery is lower than 10°C. In some embodiments, after the electronic device 100 invokes the battery heating service bms_heating, a battery temperature monitoring thread may be created, and the battery temperature monitoring thread may be used to monitor whether a temperature of the battery of the electronic device 100 is higher than the second temperature threshold. When the electronic device 100 detects that the temperature of the battery is higher than the second temperature threshold, the electronic device 100 stops the battery heating service bms_heating, controls the charging power supply power not to supply power to the wireless coil, and starts to control the charging power supply power to charge the battery.

S305: The electronic device 100 controls the charging power supply to charge the battery.

The electronic device 100 may start the charging operation after the temperature of the battery is greater than the second temperature value.

In some embodiments, the electronic device 100 may stop the battery heating operation while starting the charging operation. Specifically, the electronic device 100 may control the charging power supply not to supply power to the wireless coil. This can avoid a case in which a power at which the charging power supply charges the battery is reduced because the charging power supply supplies power to the wireless coil.

For example, when the electronic device 100 includes the circuit (1), the circuit (2), and the circuit (3) shown in FIG. 2, the charging chip 11 of the electronic device 100 may receive electric energy input by the charging device 200, and allocate the electric energy to the battery 12 corresponding to the circuit (1). Herein, the electronic device 100 does not allocate the electric energy to the circuit (3).

Optionally, in a battery charging process, the electronic device 100 controls the charging power supply and/or the battery to supply power to a main system.

Further, in the charging process, when the electronic device 100 detects that the temperature of the battery is lower than the first temperature value, the electronic device 100 may control the charging power supply to suspend supplying power to the battery, control the charging power supply to supply power to the wireless coil, convert electric energy into thermal energy through the wireless coil, and transfer the thermal energy to the battery. In this way, a case in which charging cannot be performed because the temperature of the battery decreases in the charging process can be avoided. For a process of heating the battery by the electronic device 100, refer to the embodiment shown in FIG. 3. Details are not described herein again. Further, when the electronic device 100 determines that the temperature of the battery is lower than the first temperature value, the electronic device 100 may detect whether the electric power at which the charging power supply supplies power to the battery is less than the first charging power value. The electronic device 100 can perform the battery heating operation only when the electronic device 100 determines that the electric power at which the charging power supply supplies power to the battery is less than the first charging power value.

In some embodiments, when the temperature of the battery of the electronic device 100 is higher than the second temperature value, the electronic device 100 may control the charging power supply within a period of time (for example, 500 ms) to supply power to the battery and the wireless coil. The electronic device 100 may gradually decrease the current transmitted to the wireless coil to zero within a period of time (for example, 500 ms), and gradually increase the current transmitted to the charging power supply to a rated charging current.

In a possible implementation, to enable the electronic device 100 may control the charging power supply to charge the battery in a direct current fast charging manner, and accelerate a battery charging speed, the electronic device 100 may set the first temperature value as a lowest battery temperature (for example, 10°C) when the battery can be charged in a fast charging manner, and set the second temperature value to be greater than or equal to the first temperature value and less than a third temperature value. The third temperature value may be a highest battery temperature when the battery may be charged in a fast charging manner, or a highest battery temperature at which hardware losses are not caused, or a preset temperature value. For example, the third temperature value may be 45°C. When the battery is heated to the first temperature value or the second temperature value, the electronic device 100 may control the charging power supply to charge the battery in a direct current fast charging manner. This improves charging efficiency.

In some embodiments, in a process in which the electronic device 100 heats the battery, if the electronic device 100 has no electric energy input by an external power supply, the electronic device 100 stops heating the battery.

Specifically, after the electronic device 100 performs step S303 shown in FIG. 3, the electronic device 100 may determine, at intervals of preset time (for example, 500 ms), whether there is electric energy input to the electronic device 100. When the electronic device 100 determines that the electronic device 100 has no electric energy input by the external power supply, the electronic device 100 controls the charging power supply power to stop supplying power to the wireless coil, that is, stops the battery heating operation. It may be understood that stopping supplying power to the wireless coil described herein is not supplying power to the wireless coil by using the battery. In this way, when the charger is disconnected from the electronic device 100, or when the charger has no electric energy input from the external power supply, the electronic device 100 stops the battery heating operation, to avoid a case in which the electronic device 100 provides the electric energy of the battery to the wireless coil, and losses the electric energy of the battery are caused. It should be noted that, when the electronic device 100 detects that there is no electric energy input by the external power supply, the electronic device 100 controls the charging power supply to supply power to the main system by using the battery.

In some embodiments, that the electronic device 100 has no electric energy input by the external power supply may be understood as that the charging plug has no electric signal.

For example, a charging power supply monitoring thread may be created when the electronic device 100 invokes the battery heating service bms_heating. The charging power supply monitoring thread may be used to detect whether the charging port of the electronic device 100 is connected to the charging power supply. When the charging power supply monitoring thread detects that the charging port is not connected to the charging power supply, for example, the charger and the electronic device 100 are not plugged together, or the charger does not input electric energy to the electronic device 100, the battery heating service bms _heating is stopped. The electronic device 100 may further invoke the parameter reset function bat_heating_set_default _data () to initialize the service parameter.

In some embodiments, in a process in which the electronic device 100 heats the battery, if the battery of the electronic device 100 outputs electric energy to the outside, the electronic device 100 stops heating the battery.

Specifically, after the electronic device 100 performs step S303 shown in FIG. 3, the electronic device 100 may determine, at intervals of preset time (for example, 500 ms), whether the battery of the electronic device 100 outputs the electric energy to the outside. When the electronic device 100 determines that the battery of the electronic device 100 outputs the electric energy to the outside, the electronic device 100 controls the charging power supply power to stop supplying power to the wireless coil, that is, stops the battery heating operation. In this way, the electronic device 100 can avoid a case in which the electronic device 100 is shut down due to an unstable battery supply voltage and a low temperature.

In some embodiments, that the battery outputs the electric energy to the outside may be understood as that the battery supplies power to the processor or the main system.

For example, a battery output monitoring thread may be created when the electronic device 100 invokes the battery heating service bms _heating. The battery output monitoring thread may be used to detect whether the battery outputs electric energy to the outside, that is, whether the battery supplies power to the main system. When the battery output monitoring thread detects that the battery supplies power to the main system, the battery heating service is stopped. The electronic device 100 may further invoke the parameter reset function bat_heating_set_default _data () to initialize the service parameter.

In a possible implementation, in a process of heating the battery, when it is detected that a user uses the electronic device 100, the electronic device 100 may suspend a battery heating operation, and continue to perform the battery heating operation until it is detected that the user does not use the electronic device 100.

In some embodiments, the electronic device 100 may determine, by using whether the display is screen-on, whether the user uses the electronic device 100. When the display of the electronic device 100 is screen-on, the electronic device 100 may determine that the user is using the electronic device 100. When the display of the electronic device 100 is screen-off (also referred to as screen-sleep), the electronic device 100 may determine that the user does not use the electronic device 100. In a period in which the electronic device 100 heats the battery, the electronic device 100 may suspend the battery heating operation when detecting that the display is screen-on, and display heating prompt information, where the heating prompt information may prompt the user that the electronic device 100 is heating the battery. After the electronic device 100 detects that the display is screen-off, the electronic device 100 may continue to perform the battery heating operation. This can avoid a case in which the temperature of the battery increases too fast and user experience is poor in a use process of the user.

For example, in a battery heating process, the electronic device 100 may detect, at intervals of a period of time (for example, 500 ms), whether the display is screen-on. When the electronic device 100 determines that the display is screen-on, the electronic device 100 may control the charging power supply to suspend supplying power to the wireless coil. Then, the electronic device 100 may detect, at intervals of a period of time (for example, 500 ms), whether the display is screen-off. When the electronic device 100 determines that the display is screen-off, the electronic device 100 may control the charging power supply to continue to supply power to the wireless coil. The electronic device 100 may further display the heating prompt information when the electronic device 100 determines that the display is screen-on.

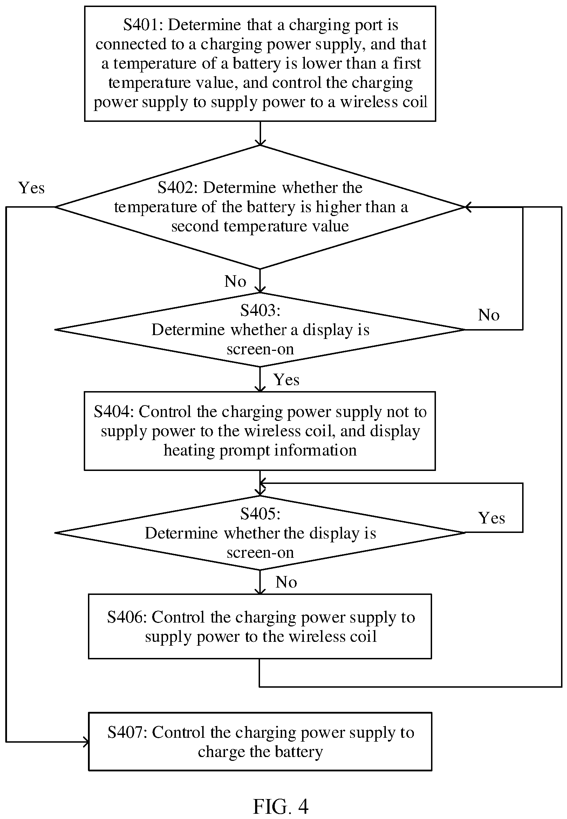

As shown in FIG. 4, the charging method includes the following steps.

S401: An electronic device 100 determines that a charging port is connected to a charging power supply, and that a temperature of a battery is lower than a first temperature value, and controls the charging power supply to supply power to a wireless coil.

S402: The electronic device 100 determines whether the temperature of the battery is higher than a second temperature value.

When the electronic device 100 determines that the temperature of the battery is higher than the second temperature value, the electronic device 100 performs step S407. When the electronic device 100 determines that the temperature of the battery is lower than or equal to the second temperature value, the electronic device 100 performs step S403.

For descriptions of step S401 and step S402, refer to the embodiment shown in FIG. 3. Details are not described herein again.

Optionally, the electronic device 100 may monitor, in a period in which the charging power supply is controlled to supply power to the wireless coil, a temperature of the battery in real time. The electronic device 100 may detect, in the period in which the charging power supply is controlled to supply power to the wireless coil, a status of a display at intervals, and perform corresponding steps based on the status of the display. For example, if the display is screen-on, the electronic device 100 controls the charging power supply power to suspend supplying power to the wireless coil, and displays heating prompt information; and if the display is screen-off, the electronic device 100 controls the charging power supply power keep/continue supplying/to supply power to the wireless coil.

S403: The electronic device 100 determines whether the display is screen-on.

The electronic device 100 may determine whether the display is screen-on. If the electronic device 100 detects that the display is screen-on, step S404 may be performed. If the electronic device 100 detects that the display is screen-off, the electronic device 100 may continue to perform step S402.

Optionally, to reduce energy consumption of the electronic device 100, the electronic device 100 may perform step S402 after preset time (for example, 500 ms) when the electronic device 100 detects that the display is screen-off.

For example, a terminal monitoring thread may be created when the electronic device 100 invokes a battery heating service bms_heating, and the terminal monitoring thread may be used to detect whether a user uses the electronic device 100. Herein, the terminal monitoring thread is used to detect whether the display of the electronic device 100 is screen-on. When the terminal monitoring thread detects that the display of the electronic device 100 is screen-on, step S404 may be performed.

S404: The electronic device 100 controls the charging power supply not to supply power to the wireless coil, and displays the heating prompt information.

When the electronic device 100 detects that the display is screen-on, the electronic device 100 may control the charging power supply to suspend supplying power to the wireless coil, and display the heating prompt information on the display. The heating prompt information may prompt the user that the electronic device 100 is heating the battery. For example, after the electronic device 100 detects that the display is screen-on, the electronic device 100 may suspend the battery heating service bms_heating.

S405: The electronic device 100 determines whether the display is screen-on.

After the electronic device 100 controls the charging power supply not to supply power to the wireless coil, the electronic device 100 may determine again whether the display is screen-on. If the electronic device 100 detects that the display is screen-on, step S405 may be performed. If the electronic device 100 detects that the display is screen-off, the electronic device 100 may continue to perform step S406.

Optionally, to reduce energy consumption of the electronic device 100, the electronic device 100 may perform step S405 after preset time (for example, 500 ms) when the electronic device 100 detects that the display is screen-on.

For example, after the electronic device 100 suspends the battery heating service bms_heating, the electronic device 100 may detect, by using the terminal monitoring thread, whether the display is screen-off. When the terminal monitoring thread detects that the display of the electronic device 100 is screen-off, step S406 may be performed.

S406: The electronic device 100 controls the charging power supply to supply power to the wireless coil.

After the electronic device 100 detects that the display is screen-off, the electronic device 100 controls the charging power supply to continue to supply power to the wireless coil, to heat the battery. Then, the electronic device 100 may continue to perform step S405. Optionally, after the electronic device 100 performs step S406, the electronic device 100 may perform step S405 after preset time (for example, 500 ms).

Optionally, before the electronic device 100 performs step S406, the electronic device 100 may determine again whether the temperature of the battery is higher than the second temperature value. When the temperature of the battery is higher than the second temperature value, step S406 is not performed, and step S407 is directly performed.

For example, when the electronic device 100 detects, by using the terminal monitoring thread, that the display of the electronic device 100 is screen-off, the electronic device 100 notifies the battery heating service bms _heating of continuing the battery heating operation. The electronic device 100 may continue to monitor, by using the terminal monitoring thread, whether the display of the electronic device 100 is screen-on.

S407: The electronic device 100 controls the charging power supply to charge the battery.

When the temperature of the battery is higher than the second temperature value, the electronic device 100 controls the charging power supply to charge the battery. Specifically, for descriptions of step S407, refer to the embodiment shown in FIG. 3. Details are not described herein again.

It should be noted that, regardless of whether the display is screen-on, the electronic device 100 can determine, based on a status of another component, whether the user uses the electronic device 100, for example, may determine, by using a speaker whether to play audio, whether the user uses the electronic device 100. When the electronic device 100 detects that the speaker plays audio, the electronic device 100 determines that the user is using the electronic device 100. When the electronic device 100 detects that the speaker does not play audio, the electronic device 100 determines that the user does not use the electronic device 100.

In some embodiments, the electronic device 100 stores the hysteresis parameter and the basic temperature parameter that are shown in FIG. 3. In a battery heating process, a value of the hysteresis parameter is a second value. When the electronic device 100 determines that the electronic device 100 has no electric energy input by an external power supply, or the battery of the electronic device 100 outputs electric energy to the outside, the electronic device 100 may stop the battery heating operation, and set the value of the hysteresis parameter as a first value. For example, a value of the basic temperature parameter is 10, the first value is 0, and the second value is 10. In the battery heating process, the value of the hysteresis parameter is the second value, a value of the temperature of the battery is 11, and the value is less than a sum of the basic temperature parameter and the hysteresis parameter. The electronic device 100 continues to heat the battery.

If the display of the electronic device 100 is screen-on, because the value of the hysteresis parameter is still the second value, and the value 11 of the temperature of the battery is less than the sum of the basic temperature parameter and the hysteresis parameter, the electronic device 100 does not terminate the battery heating operation, but suspends the battery heating operation, and continues the battery heating operation when the display of the electronic device 100 is screen-off. When the temperature of the battery rises and the value of the temperature of the battery is 5, the temperature of the battery is still less than the sum of the basic temperature parameter and the hysteresis parameter, and the electronic device 100 continues to perform the battery heating operation. If the electronic device 100 has no electric energy input by the external power supply, the electronic device 100 directly terminates the battery heating operation, and sets the value of the hysteresis parameter as the first value. When the electronic device 100 receives the electric energy input by the external power supply again, a value 11 of the temperature of the battery of the electronic device 100 is greater than the sum of the basic temperature parameter and the hysteresis parameter. In this case, the value of the hysteresis parameter is the first value. The electronic device 100 does not perform the battery heating operation. In this way, the electronic device 100 may avoid repeatedly heating the battery based on the hysteresis parameter.

In a possible implementation, before the electronic device 100 starts to perform the battery heating operation, the electronic device 100 detects that the display is in a screen-on state. The electronic device 100 may display the heating prompt information, and perform the battery heating operation after detecting that the display is screen-off.

Specifically, before the electronic device 100 performs step S303 shown in FIG. 3, the electronic device 100 detects whether the display is screen-on. When the electronic device 100 detects that the display is screen-on, the electronic device 100 may determine again whether the display is screen-on after preset time (for example, 5s). Step S303 is performed until the electronic device 100 determines that the display is screen-off.

For example, before invoking the battery heating service bms_heating, the electronic device 100 may detect whether the display is screen-on. The electronic device 100 may switch the main thread work from the running state to the blocked state when the electronic device 100 detects that the display is screen-on. The electronic device 100 may switch the main thread work from the blocked state to the running state after preset time (for example, 5s), and determine again whether the display is screen-on, and by analogy, until the electronic device 100 determines that the display is screen-off, and invokes the battery heating service bms_heating.

The following describes a diagram of a group of charging scenarios according to an embodiment of this application.

In some application scenarios, before an electronic device 100 starts to perform a battery heating operation, the electronic device 100 detects that a display is screen-on. The electronic device 100 may display heating prompt information, and the heating prompt information may prompt a user that the electronic device 100 is heating a battery. The heating prompt information may include but is not limited to one or more of text prompt information, picture prompt information, animation prompt information, and voice prompt information.

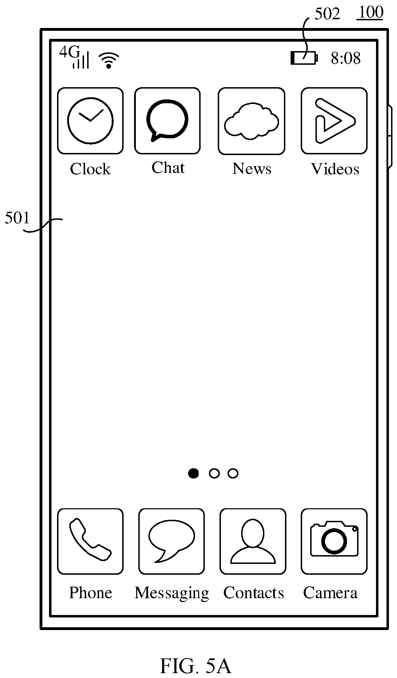

For example, as shown in FIG. 5A, the electronic device 100 may display a desktop 501. The desktop 501 may include a plurality of application icons (such as a clock application icon and a chat application icon). Optionally, a status bar including icons such as a time identifier icon and a battery level identifier icon 502 may be further displayed above the desktop 501. The battery level identifier icon 502 may indicate a remaining battery level of the electronic device 100. Optionally, a plurality of tray icons (such as a phone application icon, an information application icon, a contact application icon, and a camera application icon) may be displayed below the plurality of application icons, and the tray icons may remain displayed during page switching.

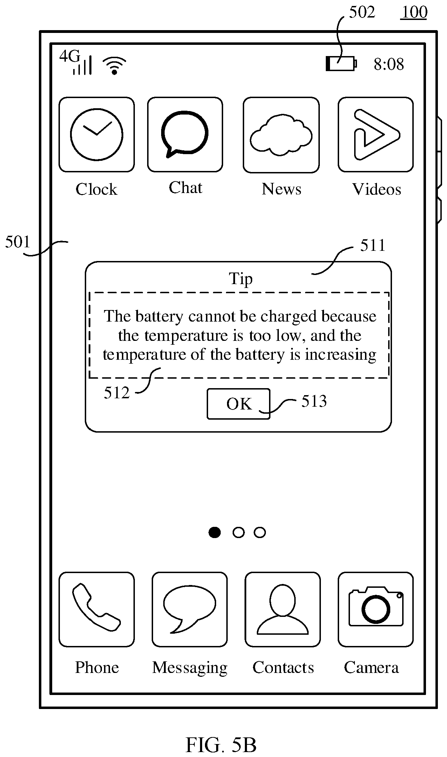

When the electronic device 100 determines that a charging port is connected to a charging power supply, the electronic device 100 may determine whether a temperature of the battery is lower than a first temperature value. For a description of determining, by the electronic device 100, whether the temperature of the battery is lower than the first temperature value, refer to the embodiment shown in FIG. 3. Details are not described herein again. After the electronic device 100 determines that the temperature of the battery is lower than the first temperature value, the electronic device 100 detects that the display of the electronic device 100 is screen-on. The electronic device 100 may display, on the desktop 501, a prompt box 511 shown in FIG. 5B.

As shown in FIG. 5B, the prompt box 511 may include prompt information 512. The prompt information 512 may prompt the user to suspend the use of the electronic device 100. For example, the prompt information 512 may be the text prompt information: "The battery cannot be charged because the temperature is too low, and the temperature of the battery is increasing".

Optionally, the prompt box 511 may further include an OK button 513, and the OK button 513 may be used to trigger the electronic device 100 to cancel displaying of the prompt box 511.

In a possible implementation, to prevent the user from disconnecting an electric energy input from an external power supply (for example, disconnecting a charger from the electronic device 100) in a process of heating the battery by the electronic device 100, the electronic device 100 may display disconnection prompt information, where the disconnection prompt information may prompt the user to keep the charger in position. The disconnection prompt information may include but is not limited to one or more of text prompt information, picture prompt information, animation prompt information, and voice prompt information. For example, the disconnection prompt information may be the text prompt information: "Keep the charger connected".

In a possible implementation, because the display is screen-on, the electronic device 100 suspends the battery heating operation, and the electronic device 100 may display use suspension prompt information, where the use suspension prompt information may prompt the user to suspend the use of the electronic device 100. The use suspension prompt information may include but is not limited to one or more of text prompt information, picture prompt information, animation prompt information, and voice prompt information. For example, the use suspension prompt information may be the text prompt information: "Suspend the use of the electronic device 100".

Further, the use suspension prompt information may prompt the user that battery charging time is prolonged when the display of the electronic device 100 is screen-on. For example, the use suspension prompt information may be the text prompt information: "The display is screen-on, which affects battery charging efficiency. Suspend the use of the electronic device 100". In this way, the user may be prompted to suspend the use of the electronic device 100, to complete the battery heating operation more quickly. Optionally, the OK button 513 may be used to trigger the display of the electronic device 100 to be screen-off. In this way, the user may directly control, by using the OK button, the display of the electronic device 100 to be screen-off.

In some embodiments, because the electronic device 100 is heating the battery and has not started to control the charging power supply to charge the battery, the electronic device 100 may continue to display the battery level identifier icon 502 in the status bar on the desktop 501. In some other embodiments, after the electronic device 100 determines that the charging port is connected to the charging power supply, the electronic device 100 may cancel displaying the battery level identifier icon 502, and display a charging identifier icon at a position of the battery level identifier icon 502, where the charging identifier icon may be used to prompt the user that the electronic device 100 is receiving electric energy input by the charger. In some other embodiments, after the electronic device 100 determines that the temperature of the battery is lower than the first temperature value, the electronic device 100 may cancel displaying the battery level identifier icon 502, and display a battery heating icon at a position of the battery level identifier icon 502, where the battery heating icon may be used to prompt the user that the electronic device 100 is increasing the temperature of the battery.

Optionally, the display of the electronic device 100 is screen-on. After the electronic device 100 determines that the temperature of the battery is lower than the first temperature value, the electronic device 100 may directly control the display of the electronic device 100 to be screen-off.

In some other application scenarios, an electronic device 100 is performing a battery heating operation, and the electronic device 100 detects that a display is screen-on. The electronic device 100 may display heating prompt information, and the heating prompt information may prompt a user that the electronic device 100 is performing a battery heating operation. The heating prompt information may include but is not limited to one or more of text prompt information, picture prompt information, animation prompt information, and voice prompt information.

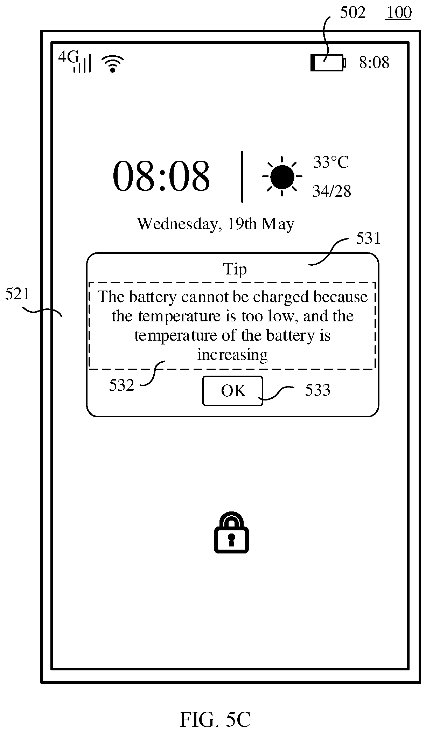

For example, in a process of controlling a charging power supply to supply power to a wireless coil, so that the wireless coil generates heat and transfers heat to a battery, the electronic device 100 may detect, at intervals of preset time (for example, 500 ms), whether the display of the electronic device 100 is screen-on. The electronic device 100 may display a lock screen interface 521 shown in FIG. 5C when the electronic device 100 detects that the display of the electronic device 100 is screen-on.

As shown in FIG. 5C, the lock screen interface 521 may include a prompt box 531 and may include prompt information 532. Optionally, the prompt box 531 may further include an OK button 533. Specifically, for a description of the prompt box 531, refer to the embodiment shown in FIG. 5B. Details are not described herein again.

In some embodiments, because the electronic device 100 is heating the battery and has not started to control the charging power supply to charge the battery, the electronic device 100 may display a battery level identifier icon 502 on the lock screen interface 521. For a description of the battery level identifier icon 502, refer to the embodiment shown in FIG. 5A. Details are not described herein again. In some other embodiments, the electronic device 100 may display a charging identifier icon on the lock screen interface 521, and the charging identifier icon may be used to prompt the user that the electronic device 100 is receiving electric energy input by the charging power supply. In some other embodiments, the electronic device 100 may display a battery heating icon on the lock screen interface 521, and the battery heating icon may be used to prompt the user that the electronic device 100 is increasing a temperature of the battery.

In some embodiments, after the electronic device 100 receives a screen-on input (for example, an input for a power button of the electronic device 100) of the user, the electronic device 100 may display, in response to the input, the lock screen interface 521 shown in FIG. 5C.

Optionally, in a process in which the electronic device 100 controls the charging power supply to supply power to the wireless coil, so that the wireless coil generates heat and transfers heat to the battery, after the electronic device 100 receives an input (for example, an input for a fingerprint unlock button of the electronic device 100) that triggers the electronic device 100 to display the desktop 501, the electronic device 100 may display, in response to the input, the desktop 501 shown in FIG. 5B.

It should be noted that, after the electronic device 100 detects that the temperature of the battery is higher than the second temperature value and starts to control the charging power supply to charge the battery, if the electronic device 100 detects that the display of the electronic device 100 is screen-on, the electronic device 100 no longer displays the heating prompt information. Optionally, when the electronic device 100 detects that the display of the electronic device 100 is screen-on, the electronic device 100 may display a battery level identifier icon 502 shown in FIG. 5A.

In some other application scenarios, an electronic device 100 enables an always-on display function. When the electronic device 100 enables the always-on display function, after the display of the electronic device 100 is locked/screen-sleep/screen-off, a preset always-on display resource may be displayed on the display. The always-on display resource may include but is not limited to time information, battery level information, message information, a preset image, and the like. If the display of the electronic device 100 is screen-off, the display of the electronic device 100 may be always-on to display heating prompt information in a process of performing a battery heating operation. The heating prompt information may prompt the user that the electronic device 100 is performing the battery heating operation. The heating prompt information may include but is not limited to one or more of text prompt information, picture prompt information, animation prompt information, and voice prompt information. In this way, the user may learn, through the heating prompt information displayed through the always-on display, that the electronic device 100 is performing the battery heating operation, to reduce a quantity of operation times of turning on the display, or not perform an operation of turning on the display. In this way, the electronic device 100 can reduce time for suspending battery heating, and increase a temperature of the battery more quickly.

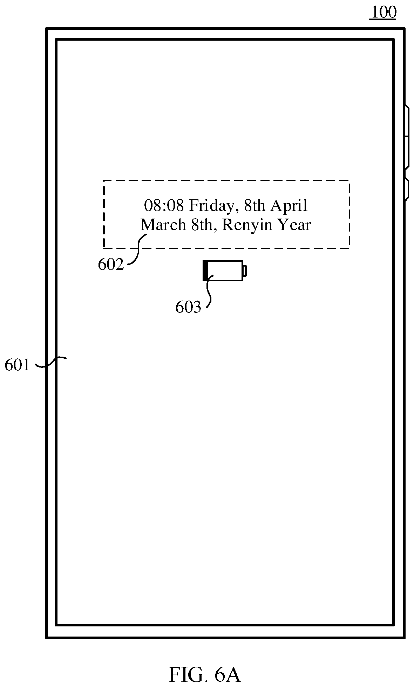

For example, as shown in FIG. 6A, the electronic device 100 displays an always-on display interface 601. A battery level identifier icon 603 is displayed on the always-on display interface 601, and the battery level identifier icon 603 may indicate a remaining battery level of the electronic device 100. Optionally, time information 602 may be displayed on the always-on display interface 601.

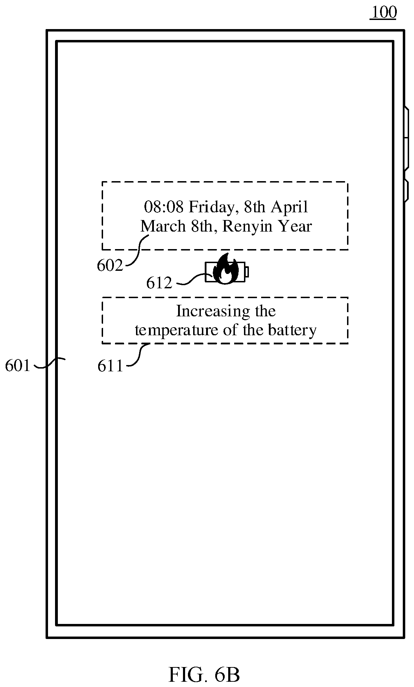

After the electronic device 100 determines that a charging port is connected to a charging power supply, the electronic device 100 may determine whether the temperature of the battery is lower than a first temperature value. For a description of determining, by the electronic device 100, whether the temperature of the battery is lower than the first temperature value, refer to the embodiment shown in FIG. 3. Details are not described herein again. After the electronic device 100 determines that the temperature of the battery is lower than the first temperature value, the electronic device 100 may display, on the always-on display interface 601, prompt information 611 shown in FIG. 6B.

As shown in FIG. 6B, the prompt information 611 may prompt the user that the electronic device 100 is heating the battery. The prompt information 611 includes but is not limited to one or more of picture prompt information, text prompt information, and animation prompt information. Herein, the prompt information 611 may be the text prompt information: "Increasing the temperature of the battery". Optionally, the prompt information 611 may further include hyperlink information, where the hyperlink information indicates a specified page, and the specified page may include information used to explain why the electronic device 100 performs the battery heating operation.

In a possible implementation, to prevent the user from disconnecting an electric energy input from an external power supply (for example, disconnecting a charger from the electronic device 100) in a process of heating the battery by the electronic device 100, the display of the electronic device 100 may be always-on to display disconnection prompt information, where the disconnection prompt information may prompt the user to keep the charger in position. The disconnection prompt information may include but is not limited to one or more of text prompt information, picture prompt information, animation prompt information, and voice prompt information. For example, the disconnection prompt information may be the text prompt information: "Keep the charger connected".

In a possible implementation, because the display is screen-on, the electronic device 100 suspends the battery heating operation, and the display of the electronic device 100 may be always-on to display use suspension prompt information, where the use suspension prompt information may prompt the user to suspend the use of the electronic device 100. The use suspension prompt information may include but is not limited to one or more of text prompt information, picture prompt information, animation prompt information, and voice prompt information. For example, the use suspension prompt information may be the text prompt information: "Suspend the use of the electronic device 100".

Further, the use suspension prompt information may prompt the user that battery charging time is prolonged when the display of the electronic device 100 is screen-on. For example, the use suspension prompt information may be the text prompt information: "The display is screen-on, which affects battery charging efficiency. Suspend the use of the electronic device 100". In this way, the user may be prompted to suspend the use of the electronic device 100, to complete the battery heating operation more quickly.

In some embodiments, because the electronic device 100 is heating the battery and has not started to control the charging power supply to charge the battery, the electronic device 100 may continue to display, on the always-on display interface 601, the battery level identifier icon 603 shown in FIG. 6A. In some other embodiments, after the electronic device 100 determines that the charging port is connected to the charging power supply, the electronic device 100 may cancel displaying the battery level identifier icon 603, and display a charging identifier icon at a position of the battery level identifier icon 603, where the charging identifier icon may be used to prompt the user that the electronic device 100 is receiving electric energy input by the charging power supply. In some other embodiments, after the electronic device 100 determines that the preset condition is met, the electronic device 100 may cancel displaying the battery level identifier icon 603, and display, at a position of the battery level identifier icon 603, a battery heating icon 612 shown in FIG. 6B. The battery heating icon 612 may be used to prompt the user that the electronic device 100 is increasing the temperature of the battery.

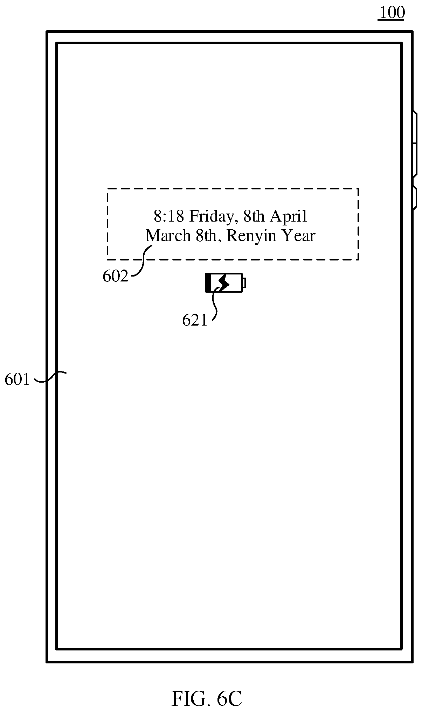

After the electronic device 100 detects that the temperature of the battery is higher than the second temperature value and starts to control the charging power supply to charge the battery, the electronic device 100 may display a charging identifier icon 621 shown in FIG. 6C.

In a possible implementation, in a process in which the electronic device 100 heats the battery, a display of the electronic device 100 is screen-on, and the electronic device 100 may control the charging power supply not to supply power to the wireless coil, and display disconnection prompt information. The disconnection prompt information may prompt the user not to disconnect the charger. The disconnection prompt information may include but is not limited to one or more of picture prompt information, text prompt information, animation prompt information, and the like. For example, the disconnection prompt information may be the text prompt information: "The temperature of the battery is increasing. Keep the charger connected".

Further, in a process in which the electronic device 100 starts to heat the battery, if the display of the electronic device 100 is screen-on, the electronic device 100 may control the charging power supply not to supply power to the wireless coil. In addition, the electronic device 100 may further detect a housing temperature of the electronic device 100. When the electronic device 100 detects that the housing temperature is greater than or equal to a specified first housing temperature value, the electronic device 100 may display use suspension prompt information. The use suspension prompt information may prompt the user to suspend the use of the electronic device 100. The use suspension prompt information may include but is not limited to one or more of picture prompt information, text prompt information, animation prompt information, and the like. For example, the use suspension prompt information may be the text prompt information: "The temperature of the battery is increasing. Keep the charger connected and suspend the use of the electronic device". For another example, the use suspension prompt information may be the text prompt information: "The temperature of the battery is increasing. Keep the charger connected. Currently, the temperature of the electronic device is high. Suspend the use of the electronic device". It should be noted that, when the display of the electronic device 100 is screen-on, and the housing temperature of the electronic device 100 is less than the specified first housing temperature value, disconnection prompt information is displayed. When the housing temperature of the electronic device 100 is greater than the specified first housing temperature value, the use suspension prompt information is displayed.

In some embodiments, the electronic device 100 may obtain the temperature of the housing of the electronic device 100 via a temperature sensor (for example, the temperature sensor B mentioned in the embodiment shown in FIG. 1B).

In some embodiments, the specified first housing temperature value may be 47°C. In this way, when the temperature of the electronic device 100 is higher than 47°C, skin of the user may be scalded. Therefore, the specified first housing temperature value is set as 47°C, so that a temperature of the battery increase and scalding of the user can be avoided. Optionally, the temperature value of the first housing may be specified to be lower than 47°C, to further reduce a possibility of scalding the user.

In a possible implementation, in a process in which the electronic device 100 starts to heat the battery, if the display of the electronic device 100 is screen-on, the electronic device 100 may further detect a housing temperature of the electronic device 100. When the electronic device 100 detects that the housing temperature is less than the specified first housing temperature value, the electronic device 100 may control the charging power supply to continue to supply power to the wireless coil, and display disconnection prompt information. When the electronic device 100 detects that the housing temperature is greater than or equal to the specified first housing temperature value, the electronic device 100 may control the charging power supply not to supply power to the wireless coil, and display use suspension prompt information.

In a possible implementation, the electronic device 100 may detect the housing temperature of the electronic device 100 in a process of starting battery heating. When the electronic device 100 detects that the housing temperature is less than the specified first housing temperature value, the electronic device 100 may control the charging power supply to continue to supply power to the wireless coil. When the electronic device 100 detects that the housing temperature is greater than or equal to the specified first housing temperature value, the electronic device 100 may control the charging power supply not to supply power to the wireless coil. When the electronic device 100 detects that the housing temperature is greater than or equal to the specified first housing temperature value, if the display of the electronic device 100 is screen-on, the electronic device 100 may display the use suspension prompt information. In this way, damage to hardware of the electronic device 100 caused by an excessively high temperature of the battery can be avoided. For example, a housing temperature monitoring thread may be created when the electronic device 100 may invoke a battery heating service bms _heating. The housing temperature monitoring thread may be used to detect whether the housing temperature of the electronic device 100 is greater than or equal to the specified first housing temperature value. When the housing temperature monitoring thread detects that the housing temperature of the electronic device 100 is greater than or equal to the specified first housing temperature value, the housing temperature monitoring thread may control the charging power supply to suspend supplying power to the wireless coil until the housing temperature monitoring thread detects that the housing temperature of the electronic device 100 is less than the specified first housing temperature value. When the housing temperature monitoring thread detects that the housing temperature of the electronic device 100 is less than the specified first housing temperature value, the housing temperature monitoring thread may control the charging power supply to continue to supply power to the wireless coil.

In some application scenarios, in a process in which the electronic device 100 heats the battery, if power consumption of the electronic device 100 increases, to ensure running of the electronic device 100, an electric power at which the charging power supply supplies power to the wireless coil is reduced, and an electric power at which the charging power supply supplies power to a main system is increased. For example, the electronic device 100 may reduce, by using a wireless chip, a power supply frequency for supplying power to the wireless coil, and/or increase a periodicity in which the wireless coil sends a first signal, and/or reduce a supply power for supplying power to the wireless coil.

For example, in a process of heating the battery, the electronic device 100 may control the charging power supply to supply power to the main system at a first supply power, and supply power to the wireless coil at a second supply power. The electronic device 100 may detect the power consumption of the main system at intervals of a period of time (for example, 500 ms). When the electronic device 100 determines that power consumption of the main system is greater than a first power consumption value, the electronic device 100 may control the charging power supply to supply power to the main system at a third supply power, and supply power to the wireless coil at a fourth supply power, where the third supply power is greater than the first supply power, and the fourth supply power is less than the second supply power. Then, the electronic device 100 may detect, at intervals of a period of time (for example, 500 ms), whether the power consumption of the main system is less than the first power consumption value. When the electronic device 100 determines that the power consumption of the main system is less than the first power consumption value, the electronic device 100 may control the charging power supply to supply power to the main system at the first supply power and supply power to the wireless coil at the second supply power.

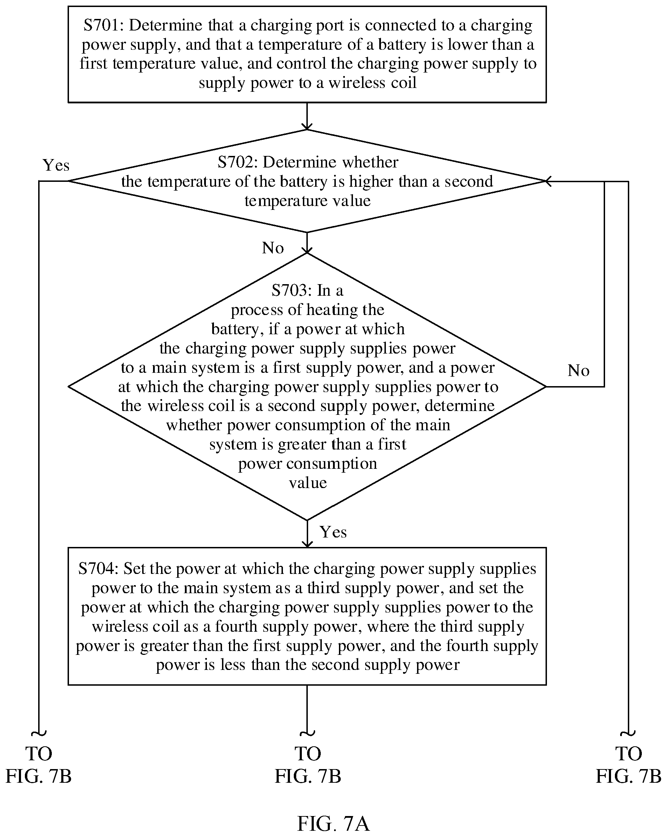

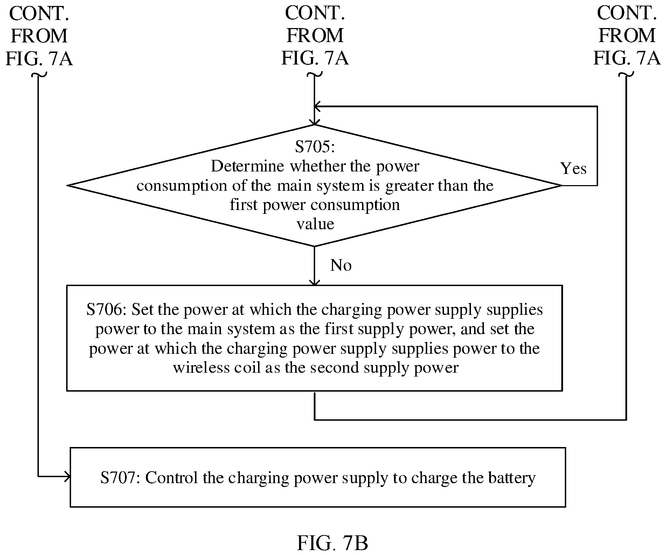

For example, as shown in FIG. 7A and FIG. 7B, the charging method includes the following steps.

S701: An electronic device 100 determines that a charging port is connected to a charging power supply, and that a temperature of a battery is lower than a first temperature value, and controls the charging power supply to supply power to a wireless coil.

S702: The electronic device 100 determines whether the temperature of the battery is higher than a second temperature value.

When the electronic device 100 determines that the temperature of the battery is higher than the second temperature value, the electronic device 100 performs step S707. When the electronic device 100 determines that the temperature of the battery is lower than or equal to the second temperature value, the electronic device 100 performs step S703.

For descriptions of step S701 and step S702, refer to the embodiment shown in FIG. 3. Details are not described herein again.

Optionally, the electronic device 100 may monitor, in a period in which the charging power supply is controlled to supply power to the wireless coil, a temperature of the battery in real time. The electronic device 100 may detect, in the period in which the charging power supply is controlled to supply power to the wireless coil, power consumption of a main system at intervals, and perform a corresponding step based on whether the power consumption of the main system is greater than a first power consumption value. For example, if the power consumption of the main system is greater than the first power consumption value, the charging power supply is controlled to supply power to the main system at a first supply power and supply power to the wireless coil at a second supply power; and if the power consumption of the main system is greater than the first power consumption value, the charging power supply is controlled to supply power to the main system at a third supply power and supply power to the wireless coil at a fourth supply power.

S703: In a process of heating the battery, if a power at which the charging power supply supplies power to the main system is the first supply power, and a power at which the charging power supply supplies power to the wireless coil is the second supply power, determine whether the power consumption of the main system is greater than the first power consumption value.

If the electronic device 100 detects that the power consumption of the main system is greater than the first power consumption value, the electronic device 100 performs step S704. If the electronic device 100 detects that the power consumption of the main system is less than or equal to the first power consumption value, the electronic device 100 may continue to perform step S702. The first power consumption value is greater than or equal to power consumption of the main system when the electronic device 100 invokes a battery heating service, and is less than or equal to the first supply power.

Optionally, to reduce energy consumption of the electronic device 100, the electronic device 100 may perform step S702 after preset time (for example, 500 ms) when the electronic device 100 detects that the power consumption of the main system is less than or equal to the first power consumption value.

For example, a power consumption monitoring thread may be created when the electronic device 100 invokes the battery heating service bms _heating, and the power consumption monitoring thread may be used to detect whether the power consumption of the main system is greater than the first power consumption value. When the power consumption monitoring thread detects that the power consumption of the main system of the electronic device 100 is greater than the first power consumption value, step S704 may be performed.

S704: The electronic device 100 sets the power at which the charging power supply supplies power to the main system as the third supply power, and sets the power at which the charging power supply supplies power to the wireless coil as the fourth supply power, where the third supply power is greater than the first supply power, and the fourth supply power is less than the second supply power.

When the electronic device 100 detects that the power consumption of the main system is greater than the first power consumption value, the electronic device 100 may control the charging power supply to increase a power supply volume to the main system and reduce a power supply volume to the wireless coil. A sum of the third supply power and the fourth supply power is the same as a sum of the first supply power and the second supply power.

In a possible implementation, the electronic device 100 may suspend supplying power to the wireless coil, and input all battery levels to the main system.

For example, the electronic device 100 may configure an operating parameter of a wireless chip after the electronic device 100 detects that the power consumption of the main system is greater than the first power consumption value. The electronic device 100 may reduce a power supply frequency for supplying power to the wireless coil, and/or prolong a periodicity in which the wireless coil sends a first signal.

S705: The electronic device 100 determines whether the power consumption of the main system is greater than the first power consumption value.

After the electronic device 100 adjusts power supply frequencies for the main system and the wireless coil, the electronic device 100 may determine again whether the power consumption of the main system is greater than the first power consumption value. If the electronic device 100 detects that the power consumption of the main system is greater than the first power consumption value, the electronic device 100 performs step S705. If the electronic device 100 detects that the power consumption of the main system is less than or equal to the first power consumption value, the electronic device 100 performs step S706.

Optionally, to reduce energy consumption of the electronic device 100, the electronic device 100 may perform step S705 after preset time (for example, 500 ms) when the electronic device 100 detects that the power consumption of the main system is greater than the first power consumption value.

Optionally, before the electronic device 100 performs step S706, the electronic device 100 may determine again whether the temperature of the battery is higher than the second temperature value. When the temperature of the battery is higher than the second temperature value, step S706 is not performed, and step S707 is directly performed.

For example, after the electronic device 100 suspends the battery heating service bms _heating, the electronic device 100 may detect, by using the power consumption monitoring thread, whether the power consumption of the main system is less than or equal to the first power consumption value. When the power consumption monitoring thread detects whether the power consumption of the main system of the electronic device 100 is less than or equal to the first power consumption value, step S706 may be performed.

S706: The electronic device 100 sets the power at which the charging power supply supplies power to the main system as the first supply power, and sets the power at which the charging power supply supplies power to the wireless coil as the second supply power.

After the electronic device 100 detects whether the power consumption of the main system is less than or equal to the first power consumption value, the electronic device 100 controls the charging power supply to increase the power supply volume to the main system and reduce the power supply volume to the wireless coil. Then, the electronic device 100 may continue to perform step S702. Optionally, after the electronic device 100 performs step S706, the electronic device 100 may perform step S702 after preset time (for example, 500 ms).

For example, when the power consumption monitoring thread detects whether the power consumption of the main system of the electronic device 100 is less than or equal to the first power consumption value, the electronic device 100 invokes the battery heating service bms_heating again. In addition, the operating parameter of the wireless chip is configured, and the electronic device 100 may increase the power supply frequency for supplying power to the wireless coil, and/or shorten the periodicity in which the wireless coil sends the first signal. Optionally, the electronic device 100 may set the power supply frequency for supplying power to the wireless coil as a maximum power supply frequency, where the maximum power supply frequency may be stored in a DTS file of the electronic device 100. Optionally, the electronic device 100 may set a periodicity in which the wireless coil sends the first signal to a shortest periodicity. The shortest periodicity may be stored in the DTS file of the electronic device 100.

S707: The electronic device 100 controls the charging power supply to charge the battery.

When the temperature of the battery is higher than the second temperature value, the electronic device 100 controls the charging power supply to charge the battery. Specifically, for descriptions of step S707, refer to the embodiment shown in FIG. 3. Details are not described herein again.

Optionally, in a process in which the electronic device 100 heats the battery, if the power consumption of the main system of the electronic device 100 increases, to ensure running of the electronic device 100, the electronic device 100 may control the charging power supply not to supply power to the wireless coil. Specifically, when the power consumption of the main system of the electronic device 100 is greater than or equal to the second power consumption value, the electronic device 100 controls the charging power supply to supply power only to the main system. When the power consumption of the main system of the electronic device 100 is less than the second power consumption value, the electronic device 100 controls the charging power supply to supply power to both the wireless coil and the main system.

Optionally, in the process of heating the battery, the power at which the charging power supply supplies power to the main system is the first supply power, and the power at which the charging power supply supplies power to the wireless coil is the second supply power. If the power consumption of the main system of the electronic device 100 is greater than the first power consumption value, the electronic device 100 sets the power at which the charging power supply supplies power to the main system as the third supply power, and sets the power at which the charging power supply supplies power to the wireless coil as the fourth supply power, where the third supply power is greater than the first supply power, and the fourth supply power is less than the second supply power. If the power consumption of the main system of the electronic device 100 is greater than the second power consumption value, the electronic device 100 sets the power at which the charging power supply supplies power to the main system as a fifth supply power, and sets the charging power supply not to supply power to the wireless coil, where the fifth supply power is the sum of the first supply power and the second supply power, and the second power consumption value is greater than the first power consumption value. In this way, the electronic device 100 may continue to heat the battery when the power consumption of the main system increases slightly, and preferentially supply power to the main system when the power consumption of the main system increases significantly.

It should be noted that the electronic device 100 may perform only the charging method shown in FIG. 3, to heat the battery and control the charging power supply to charge the battery. Alternatively, when the electronic device 100 performs the charging method shown in FIG. 3, the electronic device 100 may perform one or more steps of detecting whether the charging power supply is in position, detecting whether the battery outputs electric energy, detecting whether a user uses the electronic device 100, detecting whether a housing temperature of the electronic device is greater than a specified first housing temperature value, and detecting whether the power consumption of the main system is greater than the first power consumption value.

In a possible implementation, in response to determining that the charging port is connected to the charging power supply, the electronic device 100 may interrupt to invoke a function bat_beating_start() to create a main thread work of a program for heating the battery. After the main thread is created, the electronic device 100 may invoke a function bat _heating_monitor _work() to create a thread monitor. The thread monitor may be used to monitor a start heating event ET_HEATING_START. After the thread monitor is successfully created, the electronic device 100 invokes a function bat_heating_check(), and the function may be used to determine whether to invoke the battery heating service bms_heating.

An input value of the function bat_heating_check() includes but is not limited to a temperature of the battery. When the function bat _heating_check() determines that the temperature of the battery is less than or equal to a sum of a basic temperature parameter and a hysteresis parameter, a value of the hysteresis parameter is a first value, and the first value is less than or equal to 0. For example, the first value is equal to 0. The function bat_heating_check() returns a first invocation value (for example, returns a value 0). When the function bat_heating_check() determines that the temperature of the battery is greater than a sum of a first temperature threshold and the hysteresis parameter, the function bat_heating_check() returns a second invocation value (for example, returns a value 1). It should be noted that, herein, the function bat_heating_check() not only determines whether the temperature of the battery is less than or equal to the sum of the first temperature threshold and the hysteresis parameter, but also may determine whether another condition in step S301 shown in FIG. 3 is met. For details, refer to the embodiment shown in FIG. 3. Details are not described herein again.

When the function bat_heating_check() returns the first invocation value (for example, returns the value 0), the electronic device 100 may invoke the battery heating service bms_heating, and upload the start heating event ET_HEATING_START to the thread monitor. After the thread monitor receives the start heating event ET_HEATING_START, the thread monitor may configure a service parameter of the battery heating service bms _heating. Herein, the electronic device 100 may set the hysteresis parameter as a second value (for example, 30). The battery heating service bms _heating can control, based on the service parameter, the charging chip to supply power to the wireless coil, and set the working mode of the wireless coil to the TX mode. In addition, monitoring threads such as a battery temperature monitoring thread, a housing temperature monitoring thread, a charging power supply monitoring thread, a battery output monitoring thread, a terminal monitoring thread, and a power consumption monitoring thread, may be created by using the electronic device 100.

The terminal monitoring thread is used to obtain a terminal monitoring parameter, and the terminal monitoring parameter indicates whether the user uses the electronic device 100. For example, when the display of the electronic device 100 is screen-on, a value of the terminal monitoring parameter obtained by the terminal monitoring thread is a first parameter value, and when the display of the electronic device 100 is screen-off, a value of the terminal monitoring parameter obtained by the terminal monitoring thread is a second parameter value.

In the process of heating the battery, the electronic device 100 may invoke a screen status detection function bat _heating _check _screen state () at intervals of preset time. When the function determines, based on the first parameter value, that the user uses the electronic device 100, the main thread work is in a blocked state if the main thread work is in the blocked state; or the main thread work may be switched to a blocked state if the main thread work is in a running state. When the function bat_heating_check_screen_state () determines, based on the second parameter value, that the user does not use the electronic device 100, the main thread work may be switched to a running state if the main thread work is in a blocked state, or the main thread work may be kept in a running state if the main thread work is in the running state.

The housing temperature monitoring thread is used to detect a housing temperature of the electronic device 100. The housing temperature monitoring thread may display third prompt information when the housing temperature of the electronic device 100 is higher than a specified first housing temperature value. The third prompt information may prompt the user that the temperature of the electronic device 100 is high and the use of the electronic device 100 is suspended.

The power consumption monitoring thread is used to: detect the power consumption of the main system of the electronic device 100, and when the power consumption of the main system increases, reduce a power for supplying power to the wireless coil, or not supply power to the wireless coil.

The battery temperature monitoring thread is used to obtain a battery temperature parameter. The battery temperature parameter is used by the function bat_heating_check() to determine whether the temperature of the battery reaches a second temperature threshold. The second temperature threshold is a sum of the first temperature threshold and the hysteresis parameter. In this case, a value of the hysteresis parameter is the second value.

The charging power supply monitoring thread is used to obtain an input power parameter (for example, an input power value of the charging power supply, or an input current value of the charging power supply) of the charging power supply. The input power parameter of the charging power supply is used by the function bat_heating_check() to determine whether the charging power supply inputs electric energy to the electronic device 100. When the value of the input power parameter of the charging power supply is greater than 0, it may be determined that the charging power supply inputs the electric energy to the electronic device 100.

The battery output monitoring thread is used to obtain a battery output parameter (for example, a battery output power value or a battery output current value). The battery output parameter is used by the function bat_heating_check() to determine whether the battery supplies power to the main system. When a value of the battery output parameter is greater than 0, it may be determined that the battery supplies power to the main system. When the function bat _heating_check () returns the first invocation value, the electronic device 100 may invoke the function bat_heating_check () again after preset time (for example, 500 ms). The function bat_heating_check() can obtain the battery temperature parameter from the battery temperature monitoring thread, obtain the input power parameter of the charging power supply from the charging power supply monitoring thread, and obtain the battery output parameter from the battery output monitoring thread. The electronic device 100 may use these parameters as input parameters of the function, to determine whether to end the battery heating service bms_heating.

For example, when the battery temperature parameter is greater than or equal to the second temperature threshold, or the input power parameter of the charging power supply is equal to zero, or the battery output parameter is greater than zero, the function bat_heating_check() returns the second invocation value (for example, returns the value 1). When the battery temperature parameter is less than a second temperature, the input power parameter of the charging power supply is greater than zero, and the battery output parameter is equal to zero, the function bat_heating_check() returns the first invocation value. It should be noted that, being equal to 0 may be understood as being less than a specified value A, for example, 2. Greater than zero may be understood as greater than a specified value B, for example, 1. It should be further noted that when the function bat_heating_check () returns the first invocation value, the electronic device 100 may invoke the function bat_heating_check () again after preset time (for example, 500 ms), until the function bat_heating_check () returns the second invocation value.

When the function bat_heating_check() returns the second invocation value, the electronic device 100 stops the battery heating service bms_heating, and may invoke a parameter reset function bat_heating_set_default_data () to initialize the service parameter. Herein, the value of the hysteresis parameter is set as the first value.

It may be understood that determining conditions of the function bat_heating_check () invoked by the electronic device 100 before heating the battery and in the process of heating the battery are different. Optionally, the electronic device 100 may store bat_heating_check_A () and bat_heating_check_B (). bat _heating_check_A () may be used to determine whether to invoke the battery heating service bms_heating, and bat_heating_check_B () may be used to determine whether to stop the battery heating service bms_heating and whether to start the service again after the battery heating service is stopped.

In a possible implementation, the electronic device 100 may receive the wireless charging signal sent by the wireless charging device, and convert the wireless charging signal into electric energy, so that the wireless coil is heated, and the battery is indirectly heated. In this way, the electronic device 100 may first heat the battery by using the electric energy provided by the wireless charging device, and after the temperature of the battery of the electronic device 100 reaches the second temperature threshold, the electronic device 100 controls the charging power supply to charge the battery by using the electric energy provided by the wireless charging device.

In conclusion, the foregoing embodiments are only intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A charging method, comprising:
determining that a charging port is connected to a charging power supply;
when a temperature of a battery is lower than a first temperature value, controlling the charging power supply to supply power to a wireless coil, so that the wireless coil generates heat, to increase the temperature of the battery; and
when the temperature of the battery is higher than a second temperature value, controlling the charging power supply to charge the battery, wherein the second temperature value is greater than or equal to the first temperature value.

2. The method according to claim 1, wherein when the temperature of the battery is lower than the first temperature value, the method further comprises:
controlling the charging power supply to supply power to a main system.

3. The method according to claim 1 or 2, wherein when the temperature of the battery is lower than the first temperature value, the method further comprises:
controlling the charging power supply not to charge the battery.

4. The method according to any one of claims 1 to 3, wherein when the temperature of the battery is lower than the first temperature value, the method further comprises:
controlling the battery not to charge the main system.

5. The method according to any one of claims 1 to 4, wherein the controlling the charging power supply to supply power to a wireless coil specifically comprises:
controlling the charging power supply to supply power to a charging chip, and controlling the charging chip to supply power to the wireless coil.

6. The method according to claim 5, wherein the controlling the charging power supply to supply power to a charging chip, and controlling the charging chip to supply power to the wireless coil specifically comprises:
controlling the charging power supply to input a direct current to the charging chip;
controlling the charging chip to convert the direct current into an alternating current; and
controlling the charging chip to transfer the alternating current to the wireless coil.

7. The method according to claim 5 or 6, wherein the method further comprises: a power supply frequency at which the charging power supply supplies power to the wireless coil is a first power supply frequency, and the first power supply frequency is a power supply frequency used to determine that the charging chip supplies power to the wireless coil.

8. The method according to any one of claims 1 to 7, wherein the method further comprises: a supply power at which the charging power supply supplies power to the wireless coil is a first wireless supply power, and the first wireless supply power is a supply power used to determine that the charging power supply supplies power to the wireless coil.

9. The method according to any one of claims 1 to 8, wherein the method further comprises:
controlling the wireless coil to send a first signal in a first periodicity, wherein the first periodicity is a periodicity used to determine that the wireless coil sends the first signal.

10. The method according to any one of claims 1 to 9, wherein in a period in which the charging power supply is controlled to supply power to the wireless coil, the method further comprises:
if the charging port is disconnected from the charging power supply, stopping supplying power to the wireless coil.

11. The method according to any one of claims 1 to 10, wherein in the period in which the charging power supply is controlled to supply power to the wireless coil, the method further comprises:
if the battery supplies power to the main system, controlling the charging power supply to stop supplying power to the wireless coil.

12. The method according to any one of claims 1 to 11, wherein in the period in which the charging power supply is controlled to supply power to the wireless coil, the method further comprises:
if a display is screen-on, controlling the charging power supply to suspend supplying power to the wireless coil, and displaying heating prompt information on the display, wherein the heating prompt information prompts a user that the battery is being heated.

13. The method according to claim 12, wherein in a period in which the charging power supply is controlled to suspend supplying power to the wireless coil, and the heating prompt information is displayed on the display, the method further comprises:
if the display is screen-off, controlling the charging power supply to continue to supply power to the wireless coil.

14. The method according to any one of claims 1 to 13, wherein the charging power supply supplies power to the wireless coil at a first supply power, and supplies power to the main system at a second supply power, and in the period in which the charging power supply is controlled to supply power to the wireless coil, the method further comprises:
if power consumption of the main system is greater than a first power consumption value, controlling the charging power supply to supply power to the wireless coil at a third supply power and supply power to the main system at a fourth supply power, wherein the first supply power is greater than the third supply power, and the second supply power is less than the fourth supply power.

15. The method according to claim 14, wherein in a period in which the charging power supply is controlled to supply power to the wireless coil at the third supply power and supply power to the main system at the fourth supply power, the method further comprises:
if the power consumption of the main system is less than or equal to the first power consumption value, controlling the charging power supply to supply power to the wireless coil at the first supply power and supply power to the main system at the second supply power.

16. The method according to any one of claims 1 to 15, wherein the charging power supply supplies power to the wireless coil at the first supply power, and supplies power to the main system at the second supply power, and in the period in which the charging power supply is controlled to supply power to the wireless coil, the method further comprises:
if the power consumption of the main system is greater than a second power consumption value, controlling the charging power supply to suspend supplying power to the wireless coil.

17. The method according to claim 16, wherein in a period in which the charging power supply is controlled to suspend supplying power to the wireless coil, the method further comprises:
if the power consumption of the main system is less than or equal to the second power consumption value, controlling the charging power supply to continue to supply power to the wireless coil.

18. The method according to any one of claims 1 to 17, wherein in the period in which the charging power supply is controlled to supply power to the wireless coil, the method further comprises:
if a housing temperature is higher than a first housing temperature value, and the display is screen-on, controlling the charging power supply to suspend supplying power to the wireless coil, and displaying high temperature prompt information on the display, wherein the high temperature prompt information prompts the user that the housing temperature is high.

19. The method according to any one of claims 1 to 18, wherein in a period in which the charging power supply is controlled to charge the battery, the method further comprises:
controlling the charging power supply to stop supplying power to the wireless coil.

20. The method according to any one of claims 1 to 19, wherein the controlling the charging power supply to charge the battery specifically comprises:
controlling the charging power supply to charge the battery in a direct current fast charging manner.

21. The method according to any one of claims 1 to 19, wherein the charging power supply is connected to the charging port via a charging device, and charging protocols supported by the charging device comprise a dedicated charging protocol DCP, a fast charging protocol FCP, a smart charging protocol SCP, and a power delivery PD charging protocol.

22. An electronic device, wherein the electronic device comprises a processor, a wireless coil, and a battery, and the wireless coil is located near the battery;
the processor is configured to: determine that a charging port is connected to a charging power supply, and when a temperature of the battery is lower than a first temperature value, control the charging power supply to supply power to the wireless coil, so that the wireless coil generates heat, to increase the temperature of the battery; and
the processor is further configured to: when the temperature of the battery is higher than a second temperature value, control the charging power supply to charge the battery, wherein the second temperature value is greater than or equal to the first temperature value.

23. The electronic device according to claim 22, wherein when the temperature of the battery is lower than the first temperature value, the processor is further configured to control the charging power supply to supply power to a main system.

24. The electronic device according to claim 22 or 23, wherein when the temperature of the battery is lower than the first temperature value, the processor is further configured to control the charging power supply not to charge the battery.

25. The electronic device according to any one of claims 22 to 24, wherein when the temperature of the battery is lower than the first temperature value, the processor is further configured to control the battery not to supply power to the main system.

26. The electronic device according to any one of claims 22 to 25, wherein the electronic device further comprises a charging chip; and
the processor is specifically configured to: control the charging power supply to supply power to the charging chip, and control the charging chip to supply power to the wireless coil.

27. The electronic device according to claim 26, wherein the charging chip is specifically configured to: receive a direct current input by the charging power supply, convert the direct current into an alternating current, and transfer the alternating current to the wireless coil.

28. The electronic device according to any one of claims 22 to 27, wherein the processor is specifically configured to control the charging power supply to supply power to the wireless coil at a first power supply frequency, wherein the first power supply frequency is a power supply frequency used to determine that the electronic device supplies power to the wireless coil.

29. The electronic device according to any one of claims 22 to 28, wherein the processor is specifically configured to control the charging power supply to supply power to the wireless coil at a first wireless supply power, wherein the first wireless power supply frequency is a power supply power used to determine that the electronic device supplies power to the wireless coil.

30. The electronic device according to any one of claims 22 to 29, wherein the processor is further configured to control the wireless coil to send a first signal in a first periodicity, wherein the first periodicity is a periodicity used to determine that the electronic device sends the first signal.

31. The electronic device according to any one of claims 22 to 30, wherein the processor is further configured to: in a period in which the charging power supply is controlled to supply power to the wireless coil, if the charging port is disconnected from the charging power supply, stop supplying power to the wireless coil.

32. The electronic device according to any one of claims 22 to 31, wherein the processor is further configured to: in the period in which the charging power supply is controlled to supply power to the wireless coil, if the battery supplies power to the main system, control the charging power supply to stop supplying power to the wireless coil.

33. The electronic device according to any one of claims 22 to 32, wherein the electronic device further comprises a display; and
the processor is further configured to: in the period in which the charging power supply is controlled to supply power to the wireless coil, if the display is screen-on, control the charging power supply to suspend supplying power to the wireless coil, and display heating prompt information on the display, wherein the heating prompt information prompts a user that the battery is being heated.

34. The electronic device according to claim 33, wherein the processor is further configured to: in a period in which the charging power supply is controlled to suspend supplying power to the wireless coil, and the heating prompt information is displayed on the display, if the display is screen-off, control the charging power supply to continue to supply power to the wireless coil.

35. The electronic device according to any one of claims 22 to 34, wherein the processor is specifically configured to control the charging power supply to supply power to the wireless coil at a first supply power and supply power to the main system at a second supply power; and
the processor is further configured to: in a period in which the charging power supply is controlled to supply power to the wireless coil at the first supply power and supply power to the main system at the second supply power, if power consumption of the main system is greater than a first power consumption value, control the charging power supply to supply power to the wireless coil at a third supply power and supply power to the main system at a fourth supply power, wherein the first supply power is greater than the third supply power, and the second supply power is less than the fourth supply power.

36. The electronic device according to claim 35, wherein the processor is further configured to: in a period in which the charging power supply is controlled to supply power to the wireless coil at the third supply power and supply power to the main system at the fourth supply power, if the power consumption of the main system is less than or equal to the first power consumption value, control the charging power supply to supply power to the wireless coil at the first supply power and supply power to the main system at the second supply power.

37. The electronic device according to any one of claims 22 to 36, wherein the processor is specifically configured to control the charging power supply to supply power to the wireless coil at the first supply power and supply power to the main system at the second supply power; and
the processor is further configured to: in the period in which the charging power supply is controlled to supply power to the wireless coil at the first supply power and supply power to the main system at the second supply power, if the power consumption of the main system is greater than a second power consumption value, control the charging power supply to suspend supplying power to the wireless coil.

38. The electronic device according to claim 37, wherein the processor is further configured to: in a period in which the charging power supply is controlled to suspend supplying power to the wireless coil, if the power consumption of the main system is less than or equal to the second power consumption value, control the charging power supply to continue to supply power to the wireless coil.

39. The electronic device according to any one of claims 22 to 38, wherein the electronic device further comprises a display; and
the processor is further configured to: in the period in which the charging power supply is controlled to supply power to the wireless coil, if a housing temperature is higher than a first housing temperature value, and the display is screen-on, control the charging power supply to suspend supplying power to the wireless coil, and display high temperature prompt information on the display, wherein the high temperature prompt information prompts the user that the housing temperature is high.

40. The electronic device according to any one of claims 22 to 39, wherein the processor is further configured to: in a period in which the charging power supply is controlled to charge the battery, control the charging power supply to stop supplying power to the wireless coil.

41. The electronic device according to any one of claims 22 to 40, wherein the processor is specifically configured to control the charging power supply to charge the battery in a direct current fast charging manner.

42. The electronic device according to any one of claims 22 to 41, wherein the charging power supply is connected to the charging port via a charging device, and charging protocols supported by the charging device comprise a dedicated charging protocol DCP, a fast charging protocol FCP, a smart charging protocol SCP, and a power delivery PD charging protocol.

43. A processor, wherein the processor is used in an electronic device, and the processor is configured to invoke computer instructions, so that the electronic device performs the method according to any one of claims 1 to 21.

44. A computer-readable storage medium, comprising instructions, wherein when the instructions are run on an electronic device, the electronic device is enabled to perform the method according to any one of claims 1 to 21.

45. A computer program product, comprising computer instructions, wherein when the computer instructions are executed by one or more processors, the method according to any one of claims 1 to 21 is implemented.
